(19) **Europäisches Patentamt / European Patent Office / Office européen des brevets**

(11) **EP 4 693 926 A1**

(12) **EUROPEAN PATENT APPLICATION**
published in accordance with Art. 153(4) EPC

(43) Date of publication:
**11.02.2026 Bulletin 2026/07**

(21) Application number: **23933896.5**

(22) Date of filing: **20.12.2023**

(51) International Patent Classification (IPC):
**H04B 7/0456** (2017.01)

(52) Cooperative Patent Classification (CPC):
**H04B 7/0456; H04B 7/06; H04W 4/80**

(86) International application number:
**PCT/CN2023/140174**

(87) International publication number:
**WO 2024/217033 (24.10.2024 Gazette 2024/43)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **19.04.2023 CN 202310459016**

(71) Applicant: **ZTE Corporation**
**Shenzhen, Guangdong 518057 (CN)**

(72) Inventors:
• **YANG, Jun**
**Shenzhen, Guangdong 518057 (CN)**
• **CHEN, Yijian**
**Shenzhen, Guangdong 518057 (CN)**
• **YU, Hongkang**
**Shenzhen, Guangdong 518057 (CN)**
• **ZHANG, Shujuan**
**Shenzhen, Guangdong 518057 (CN)**
• **JIAN, Mengnan**
**Shenzhen, Guangdong 518057 (CN)**
• **LU, Zhaohua**
**Shenzhen, Guangdong 518057 (CN)**

(74) Representative: **Aipex B.V.**
**Vestdijk 51**
**5611 CA Eindhoven (NL)**

(54) **CHANNEL INFORMATION FEEDBACK METHOD, ELECTRONIC DEVICE, AND STORAGE MEDIUM**

(57)    Provided are a channel information feedback method, an electronic device, and a storage medium. The method includes determining a measurement result of channel state information according to a measured reference signal; determining a codebook, where the codebook includes at least one codeword; determining a codeword W within the codebook according to the measurement result; and feeding back indication information of the codeword W. The codeword W is a matrix that has N rows and r columns and includes r column vectors $V_1$, $V_2$, ..., $V_r$, where $N > 1$, and $r \geq 1$. The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix},$$

where the basis vector model u includes K sub-vectors, the length of the k-th sub-vector $v_k$ is $N_k$, and $\alpha_k$ is a sub-vector coefficient. At least one subset $FS_1$ in a set FS including sub-vectors and sub-vector coefficients in the basis vector is determined according to at least one subset $FS_2$ in the set FS. Channel information feedback for near-field communication is implemented through subarray precoding, thereby enhancing the beamforming gain.

EP 4 693 926 A1

Determine a measurement result of channel state information according to a measurement reference signal — S110

Determine a codebook, where the codebook includes at least two codewords — S120

Determine a codeword W within the codebook according to the measurement result — S130

Feed back indication information of the codeword W — S140

**FIG. 4**

**Description**

TECHNICAL FIELD

The present application relates to the field of wireless communications, particularly a channel information feedback method, an electronic device, and a storage medium.

BACKGROUND

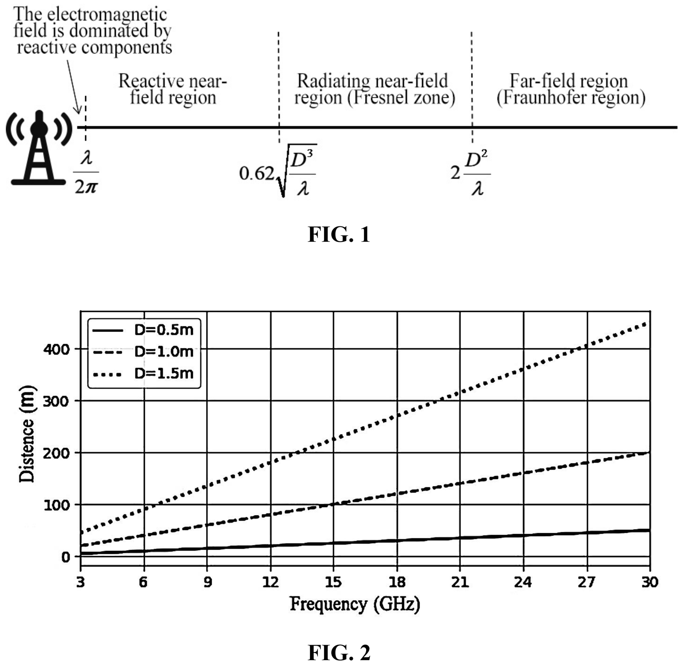

Multiple-input multiple-output (MIMO) technology is a wireless communication technology based on array antennas. In the conventional array antenna theory, the radiation region of an antenna is typically divided into a far-field region, a radiating near-field region, and a reactive near-field region, as shown in FIG. 1. In FIG. 1, D denotes the aperture of the array, and $\lambda$ denotes a carrier wavelength. When a signal transmitted by the antenna reaches the far-field region, the signal may be approximated as a plane wave. The plane wave approximation in the far-field region brings significant benefits to MIMO wireless communication, which not only simplifies the link budget but also reduces the complexity of beam control. Additionally, the number of parameters required for channel feedback is decreased, and the resource overhead is reduced. Existing communication standards assume that MIMO channels operate under far-field conditions. However, with the advancement of wireless communication technology, the diversification of wireless communication scenarios and the continuous growth in traffic demands have posed numerous challenges to wireless communications. To address these demands, wireless communication technology is increasingly developing towards higher frequency bands to obtain more spectrum resources while developing towards larger-scale transceiver arrays. As the array size gradually increases (that is, the aperture of the antenna expands) and the carrier frequency rises, traditional far-field transmission scenarios are increasingly becoming near-field transmission issues. As shown in FIG. 2, for an array with an aperture of 0.5 meters (m), the boundary between near and far fields is approximately 5 m from the center of the array at 3 GHz. When the frequency rises to 30 GHz, the boundary between near and far fields extends to about 50 m. When the aperture increases to 1.5 m, the boundary between near and far fields at 30 GHz is pushed out to 450 m. As a result, the vast majority of wireless communication scenarios fall within the near-field region of the array.

When a receiving terminal is located in the near-field region, the received signal no longer meets the plane wave approximation. If a transmitting array continues to configure a transmit precoding according to existing standard protocols, the received signal at the receiving terminal suffers significant gain loss. Although a series of near-field precoding feedback schemes have been proposed, these schemes have not been widely adopted due to high computational complexity and incompatibility with existing standard protocols. How to perform channel state information feedback in the near-field region of array antennas has become an urgent problem to address.

SUMMARY

A main object of embodiments of the present application is to provide a channel information feedback method, an electronic device, and a storage medium, in which a subarray precoding method is provided to achieve channel state information feedback in near-field communication, thereby solving near-field communication issues and enhancing beamforming gain.

Embodiments of the present application provide a channel information feedback method. The method includes the following.

A measurement result of channel state information is determined according to a measured reference signal.

A codebook is determined, where the codebook includes at least one codeword.

A codeword W is determined within the codebook according to the measurement result.

Indication information of the codeword W is fed back.

The codeword W is a matrix that has N rows and r columns and includes r column vectors $V_1$, $V_2$, ..., $V_r$, where N > 1, and r ≥ 1.

The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of the k-th sub-vector $v_k$ is $N_k$, $\alpha_k$

is the sub-vector coefficient of the k-th sub-vector $v_k$, $K \geq 1$, $1 \leq k \leq K$, $N_k \geq 1$, and i = 1, 2, ..., r. At least one subset $FS_1$ in a set FS is determined according to at least one subset $FS_2$ in the set FS, where the set FS includes the sub-vectors and sub-vector coefficients of the sub-vectors in the basis vector.

Embodiments of the present application also provide an electronic device. The electronic device includes one or more processors and a memory.

The memory is configured to store one or more programs.

When the one or more programs are executed by the one or more processors, the one or more processors are caused to perform the method of any embodiment of the present application.

Embodiments of the present application also provide a computer-readable storage medium. The computer-readable storage medium stores one or more programs which, when executed by one or more processors, cause the one or more processors to perform the method of any embodiment of the present application.

BRIEF DESCRIPTION OF DRAWINGS

FIG. 1 is a diagram illustrating the division of an antenna radiation region according to embodiments of the present application.

FIG. 2 is a diagram illustrating the distance relationships between the near-field/far-field boundary to the array centers of different arrays at different frequency bands according to embodiments of the present application.

FIG. 3 is a diagram of subarray division according to embodiments of the present application.

FIG. 4 is a flowchart of a channel information feedback method according to embodiments of the present application.

FIG. 5 is a diagram illustrating two types of subarrays according to embodiments of the present application.

FIG. 6 is an example diagram of a channel information feedback method according to embodiments of the present application.

FIG. 7 is a diagram illustrating a precoding comparison and a beamforming gain according to embodiments of the present application.

FIG. 8 is a structure diagram of a channel information feedback apparatus according to embodiments of the present application.

FIG. 9 is a structure diagram of an electronic device according to embodiments of the present application.

DETAILED DESCRIPTION

Embodiments of the present application also provide a computer-readable storage medium. The computer-readable storage medium stores one or more programs. The one or more programs are configured to, when executed by one or more processors, cause the one or more processors to perform the method of any embodiment of the present application.

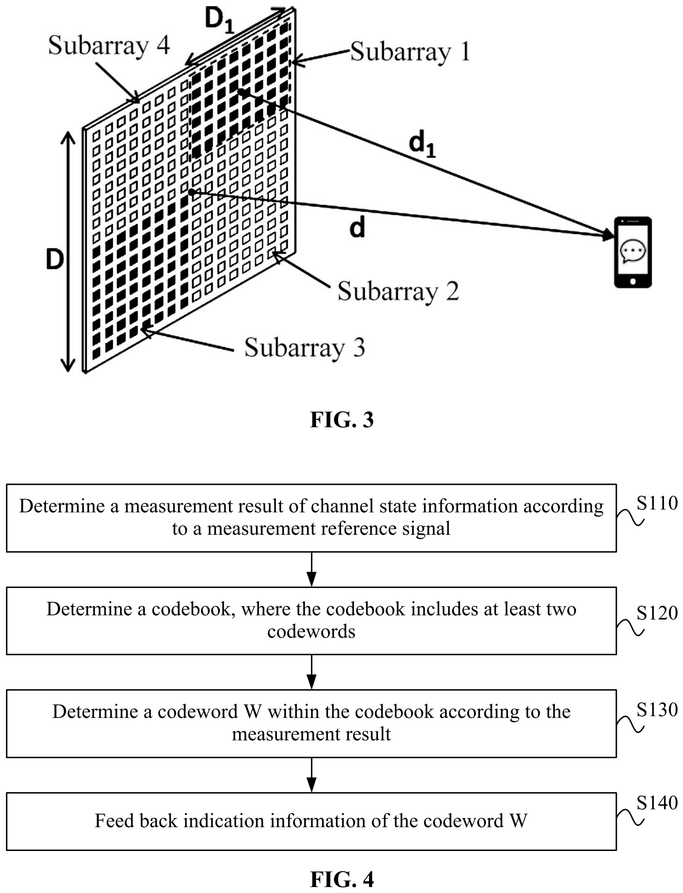

In this embodiment of the present application, a large MIMO array is divided into multiple subarrays, serving as a candidate solution to the near-field communication problem. As shown in FIG. 3, in this solution, a terminal is located in the near-field region of the MIMO array, that is, d is less than $2 D^2/\lambda$, but for the subarray 1, the distance $d_1$ from the terminal to the center point of the subarray 1 may be greater than $2 D_1^2/\lambda$. In this case, a signal transmitted by each subarray may still be assumed to be a plane wave at the user location. The precoding of each subarray may be determined according to existing standards, thereby maintaining good compatibility with existing communication protocols. This scheme has a relatively low implementation cost and can achieve a significant near-field gain improvement. However, how to configure a subarray precoding codebook for this scenario has become a primary issue.

FIG. 4 is a flowchart of a channel information feedback method according to embodiments of the present application. This embodiment of the present application is applicable to a scenario where the MIMO array is divided into multiple subarrays to achieve channel information feedback. This method can be executed by a channel information feedback apparatus. This apparatus can be implemented by software and/or hardware. As shown in FIG. 4, the method of this embodiment of the present application includes the following:

In S110, a measurement result of channel state information is determined according to a measured reference signal.

In this embodiment of the present application, the measurement result of the channel state information may be determined according to the measured reference signal. Specifically, the reference signal transmitted by the communication terminal may be received, and the measurement result of the channel state information may be determined through estimation of the reference signal. The reference signal may be a pilot signal used for channel estimation. The reference signal may be a known signal sequence. The sequence may be denoted as s. The received reference signal may be represented as:

$$y = Hs + n.$$

In the above formula, H denotes a channel matrix, y denotes a received signal vector, and $n$ denotes a noise vector. The channel estimation may be performed based on the received reference information by means of minimum mean-square error (MMSE), low-order linear minimum mean-square error (LMMSE) or the like, and then the channel matrix H is determined and used as the channel state information. It is to be understood that since the dimension of H is generally large, directly feeding H back to a first communication node may cause a large overhead, and thus, the channel information generally needs to be quantized.

In S120, a codebook is determined, where the codebook includes at least one codeword.

The codebook may be an information set for configuring the precoding of subarrays in the MIMO array. The codebook may include codewords. Each codeword may be used for precoding the MIMO array. It is to be understood that at least one codeword in the codebook is obtained by using the basis vector model of this embodiment of the present application. For example, all codewords in the codebook may be obtained by using the basis vector model of the present application, or some codewords in the codebook are obtained by using the basis vector model of the present application, and other codewords may be generated by using other models.

In this embodiment of the present application, one or more codebooks may be preconfigured based on the communication transmission scenario and the communication transmission requirement, and the codebook for feeding back channel state information may be selected from the one or more codebooks. Specifically, in some embodiments, the codebook may be determined based on the measurement result of the channel state information, or the maximum number of transmission layers of the current channel may be determined based on the rank of the channel matrix H or the channel quality indication information so that a proper codebook is determined.

In S130, a codeword W is determined within the codebook according to the measurement result.

Specifically, the codeword W may be selected from the codebook based on the measurement result. The selected codeword W is used for configuration of precoding of the MIMO array and for information transmission. One codeword in the codebook may correspond to one piece of spatial channel information, and therefore, the channel information may be obtained based on the fed-back codeword information. The selected codeword W usually should match the channel measurement result so that a better beamforming gain is obtained.

In this embodiment of the present application, the codeword W in the codebook may be an N-by-r matrix. The matrix includes r column vectors $V_1$, $V_2$, ..., $V_r$, and each column vector has a length of N, where N > 1. The value of r may be obtained from the basis vector model. The basis vector model is represented as follows:

$$u = \begin{bmatrix} \alpha_1 v_1 \\ \alpha_2 v_2 \\ \vdots \\ \alpha_K v_K \end{bmatrix}.$$

The basis vector model may include a sub-vector $v_k$ and a sub-vector coefficient $\alpha_k$, where k = 1, 2, ..., K, and K is a positive integer. The length of the sub-vector $v_k$ is $N_k$. The sum of the lengths of the sub-vectors is N. Each sub-vector in the basis vector model may correspond to the precoding matrix of one subarray. The sub-vector $v_k$ denotes a precoding vector for array beam manipulation. The MIMO array may radiate a directional beam in a specified direction or a set of directional beams in specified directions through the precoding vector. The sub-vector coefficient $\alpha_k$ can achieve phase alignment among different subarrays within the MIMO array. The product of a sub-vector and the corresponding sub-vector coefficient may be used as the actual precoding vector of a subarray in the MIMO array. The basis vector model may satisfy the following condition: A sub-vector may be determined according to another sub-vector, or a sub-vector may be determined according to a sub-vector coefficient, and a sub-vector coefficient may be determined according to another sub-vector coefficient, or a sub-vector coefficient may be determined according to a sub-vector.

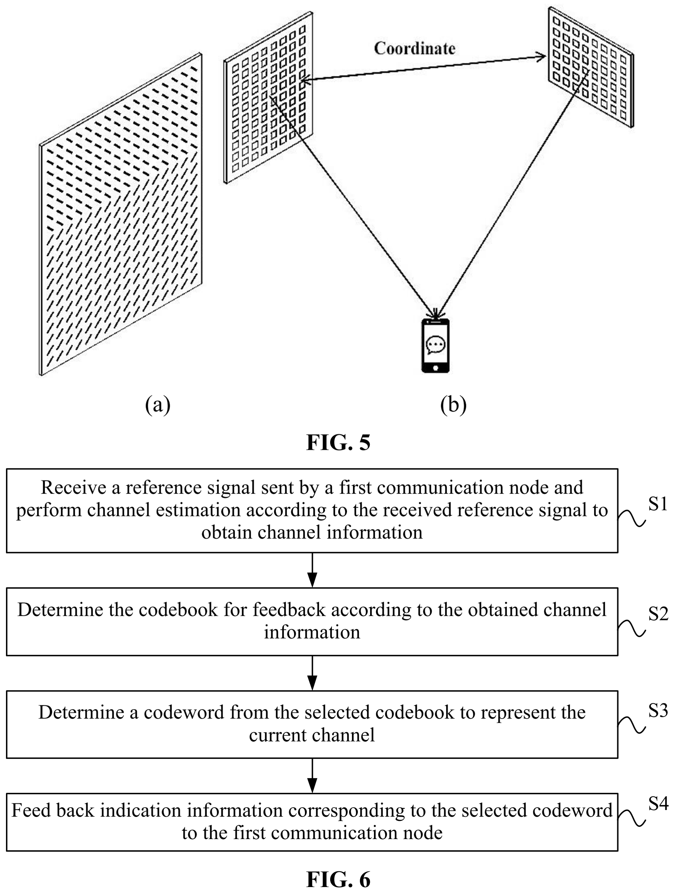

In an example embodiment, the basis vector model u of this embodiment of the present application may be used in a communication scenario where a large-scale antenna array is divided into multiple subarrays. Precoding may be designed for each subarray separately to obtain a better near-field beamforming gain. The subarray may be a subarray generated through logical division shown in FIG. 3 or may be a physically isolated or spatially separated subarray shown in FIG. 5. In FIG. 5(a), a large array is divided into two subarrays, where the upper subarray is a + 45° polarized array and the lower subarray is a -45° polarized array. This type of division facilitates polarization isolation and reduces interference between dual-polarized signals. FIG. 5(b) shows cooperative communication between distributed arrays. The two separate arrays may be considered as two subarrays of a large array. The communication scenarios shown in FIG. 3 and FIG. 5 both involve subarray precoding. The codeword constructed by the basis vector model u in the present application is applicable to the preceding communication scenario and is also applicable to other future communication scenarios that require subarray division.

In S140, indication information of the codeword W is fed back.

The codeword W is a matrix that has N rows and r columns and includes r column vectors $V_1$, $V_2$, ..., $V_r$, where N > 1, and r ≥ 1. The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of the k-th sub-vector $v_k$ is $N_k$, $\alpha_k$ is a sub-vector coefficient, K ≥ 1, 1 ≤ k ≤ K, $N_k$ ≥ 1, and i = 1, 2, ..., r. At least one subset $FS_1$ in a set FS including sub-vectors and sub-vector coefficients in the basis vector is determined according to at least one subset $FS_2$ in the set FS.

In this embodiment of the present application, the indication information of the codeword is determined through the preceding operations to indicate the codebook used by the communication terminal in communication. It is to be understood that since the codeword includes one or more precoding vectors, directly feeding back the codeword incurs a large channel resource overhead. The channel resource overhead of the codeword feedback can be reduced through the indication information. The indication information indicates the codeword. It is to be understood that in this embodiment of the present application, the codeword may be obtained through the basis vector model. The basis vector model includes sub-vectors and sub-vector coefficients. A sub-vector or a sub-vector coefficient may be determined according to another sub-vector or another sub-vector coefficient. That is, in the set FS including sub-vectors and sub-vector coefficients in the basis vector model, at least one subset $FS_1$ is determined according to at least one subset $FS_2$. The indication information indicating the codeword may be a number or other identifiers.

Specifically, the MIMO array achieves beamforming based on the principle of in-phase superposition. To achieve in-phase superposition of the electromagnetic signals radiated by radiators along a specified direction, the initial phases of two adjacent sub-vectors have an association. In the basis vector model u of this embodiment of the present application, there may also exist an association between a sub-vector and a sub-vector coefficient. The association between a sub-vector and a sub-vector coefficient may be determined according to the spatial position relationship between subarrays of the MIMO array. The set including sub-vectors and sub-vector coefficients of the basis vector model u may be denoted as $FS = [v_1, v_2, \cdots, v_K, \alpha_1, \alpha_2, \cdots, \alpha_K]$. FS includes at least two subsets denoted as $FS_1$ and $FS_2$. The basis vector model u at least satisfies that the subset $FS_1$ is determined according to the subset $FS_2$ or the subset $FS_2$ is determined according to the subset $FS_1$.

Further, based on the previous embodiment of the present application, a subset $FS_1$ in the set FS includes all of the sub-vectors in the basis vector model, and a subset $FS_2$ in the set FS includes all of the sub-vector coefficients in the basis vector model.

Specifically, in the set FS including sub-vectors and sub-vector coefficients in the basis vector model, all of the sub-vectors form the subset $FS_1$, and all of the sub-vector coefficients form the subset $FS_2$. In the basis vector model, $FS_1$ may determine $FS_2$, that is, the sub-vector set may determine the sub-vector coefficient set.

In another embodiment, a subset $FS_1$ includes a part of the sub-vectors in the basis vector model, and a subset $FS_2$ includes a part of the sub-vector coefficients in the basis vector model.

Specifically, in the set FS including sub-vectors and sub-vector coefficients in the basis vector model, a part of the sub-vectors forms the subset $FS_1$, and a part of the sub-vector coefficients forms the subset $FS_2$. In the basis vector model, $FS_1$ may determine $FS_2$, that is, the part of the sub-vectors may determine the part of the sub-vector coefficients.

Further, based on the previous embodiment of the present application, the subset $FS_1$ in the set FS includes a part of the sub-vectors and a part of the sub-vector coefficients in the basis vector model, and the subset $FS_2$ in the set FS includes another part of sub-vectors and another part of sub-vector coefficients in the basis vector model.

In this embodiment of the present application, the subset $FS_1$ may include sub-vectors and sub-vector coefficients, and the subset $FS_2$ may include another part of sub-vectors and another part of sub-vector coefficients in the basis vector. Specifically, the part of the sub-vectors and the part of the sub-vector coefficients in the basis vector determine the other part of the sub-vectors or the other part of sub-vector coefficients.

In some embodiments of the present application, the value of one of the subset $FS_1$ and the subset $FS_2$ is determined according to the value of the other one of the subset $FS_1$ and the subset $FS_2$.

In this embodiment of the present application, the value of one of the subset $FS_1$ and the subset $FS_2$ is determined according to the value of the other one of the subset $FS_1$ and the subset $FS_2$ in the following manner: the value of the subset $FS_1$ is determined according to the value of the subset $FS_2$, or the value of the subset $FS_2$ is determined according to the value of the subset $FS_1$. It is to be understood that when the subset $FS_1$ includes all of the sub-vectors of the basis vector and the subset $FS_2$ includes all of the sub-vector coefficients of the basis vector, all of the sub-vectors of the basis vector may be determined according to all of the sub-vector coefficients of the basis vector; and when the subset $FS_1$ includes a part of the sub-vectors of the basis vector and the subset $FS_2$ includes a part of the sub-vector coefficients of the basis vector, the part of the sub-vectors of the basis vector may be determined according to the part of the sub-vector coefficients of the basis vector.

In some embodiments of the present application, the indication information includes at least one indication parameter, and an indication parameter of the at least one indication parameter indicates two elements in the set FS simultaneously.

In this embodiment of the present application, the fed-back indication information of the codeword may include one or more indication parameters, and each indication parameter may indicate two elements in the set FS simultaneously. For example, the indication parameter may indicate two sub-vectors simultaneously or indicate two sub-vector coefficients simultaneously; or the indication parameter may indicate one sub-vector and one sub-vector coefficient simultaneously. It is to be understood that the sub-vector or the sub-vector coefficient indicated by the indication parameter can be determined according to the indication parameter so that the basis vector indicated by the indication information can be constructed, and the column vector of the codeword is constructed based on the basis vector so that the codeword indicated by the indication information is obtained.

Based on the preceding embodiments, an indication parameter indicates at least one sub-vector and at least one sub-vector coefficient in the set FS simultaneously.

In this embodiment of the present application, the indication information may include at least one indication parameter. The indication parameter may indicate at least one sub-vector and one sub-vector coefficient in the set FS simultaneously. The indication parameter may indicate at least one sub-vector and at least one sub-vector coefficient simultaneously. The sub-vector and the sub-vector coefficient may be used for construction of one sub-vector in the codeword. It is to be understood that the sub-vector and the sub-vector coefficient that are simultaneously indicated by the indication parameter belong to the vector of the column vector forming the codeword W. The vector can satisfy the basis vector model u. The process of constructing the column vector for the codeword W by using the vector may include constructing the column vector for the codeword W by using the vector or constructing the column vector for the codeword W by using the vector in cooperation with one or more other vectors, for example, constructing one column vector for the codeword W by using the Kronecker product of the vector and another vector satisfying the basis vector model u or constructing one column vector for the codeword W by using the weighted sum of the vector and multiple other vectors satisfying the basis vector model u.

Based on the preceding embodiments, an indication parameter indicates at least two sub-vector coefficients in the set FS simultaneously.

In this embodiment of the present application, the indication information includes at least one indication parameter. The indication parameter may indicate at least two sub-vector coefficients in the set FS simultaneously. The two sub-vector coefficients belong to the vector of one column vector forming the codeword W. The vector can satisfy the basis vector model u. In this embodiment of the present application, the codeword W can be fed back in the manner of indicating at least two sub-vector coefficients by using one indication parameter. It is to be understood that the two sub-vector coefficients that are simultaneously indicated by the indication parameter belong to the vector of one column vector forming the codeword W. The process of constructing the column vector for the codeword W by using the vector may include constructing the column vector for the codeword W by using the vector or constructing the column vector for the codeword W by using the vector in cooperation with one or more other vectors, for example, constructing one column vector for the codeword W by using the Kronecker product of the vector and another vector satisfying the basis vector model u or constructing one column vector for the codeword W by using the weighted sum of the vector and multiple other vectors satisfying the basis vector model u.

Based on the preceding embodiments, an indication parameter indicates at least two sub-vectors in the set FS simultaneously.

Specifically, the indication information includes at least one indication parameter. The indication parameter may indicate at least two sub-vectors in the set FS simultaneously. The two sub-vectors belong to the vector of one column vector forming the codeword W. The vector can satisfy the basis vector model u. In this embodiment of the present application, the codeword W can be fed back in the manner of indicating at least two sub-vectors by using one indication parameter. It is to be understood that the two sub-vectors that are simultaneously indicated by the indication parameter belong to the vector of one column vector forming the codeword W. The process of constructing the column vector for the codeword W by using the vector may include constructing the column vector for the codeword W by using the vector or constructing the column vector for the codeword W by using the vector in cooperation with one or more other vectors, for example, constructing one column vector for the codeword W by using the Kronecker product of the vector and another vector satisfying the basis vector model u or constructing one column vector for the codeword W by using the weighted sum of the vector and multiple other vectors satisfying the basis vector model u.

Based on the preceding embodiments, since $FS_1$ in the set FS is determined according to $FS_2$ in the set FS, other elements in the set FS may be determined according to the indication parameter so that the communication terminal that receives the indication information determines the codeword W according to the indication parameter described in the preceding solution so that the channel state information is fed back.

The preceding features of the basis vector model of the present application may be used for compressing the feedback indication information, thereby reducing the feedback overhead and improving the feedback efficiency.

In some embodiments of the present application, the i-th column vector $V_i$ of the codeword W is a column vector satisfying the basis vector model u, where i = 1, 2, ..., r.

Specifically, the codeword W may include r column vectors. Each column vector can be determined according to the basis vector model u. That is, each column vector $V_i$ can satisfy the basis vector model u. That is, r column vectors forming the codeword can satisfy the requirement of the basis vector model u.

By way of example, the column vector of the codeword W conforms to the basis vector model u. That is, the i-th column vector $V_i$ of the codeword W satisfies:

$$V_i = u_i = \begin{bmatrix} \alpha_{i1} v_{i1} \\ \alpha_{i2} v_{i2} \\ \vdots \\ \alpha_{iK} v_{iK} \end{bmatrix}.$$

In the above formula, $u_i$ satisfies the structure of the basis vector model u, and i = 1, 2, ..., r.

In some other embodiments of the present application, the i-th column vector $V_i$ of the codeword W is formed by the Kronecker product of two vectors $u_1$ and $u_2$. $u_1$ and $u_2$ are column vectors satisfying the basis vector model u.

In this embodiment of the present application, r column vectors forming the codeword W may each include the Kronecker product of two vectors $u_1$ and $u_2$. $u_1$ and $u_2$ are column vectors satisfying the basis vector model u.

For example, the i-th column vector $V_i$ of the codeword W is formed by the Kronecker product of two vectors $u_{i1}$ and $u_{i2}$. $V_i = u_{i1} \otimes u_{i2}$. $u_{i1}$ and $u_{i2}$ satisfy the structure of the basis vector model u:

$$u_{i1} = \begin{bmatrix} \alpha_{i1,1} v_{i1,1} \\ \alpha_{i1,2} v_{i1,2} \\ \vdots \\ \alpha_{i1,K1} v_{i1,K1} \end{bmatrix}, u_{i2} = \begin{bmatrix} \alpha_{i2,1} v_{i2,1} \\ \alpha_{i2,2} v_{i2,2} \\ \vdots \\ \alpha_{i2,K2} v_{i2,K2} \end{bmatrix}.$$

In the above formula, $K_1 \geq 1$ and $K_2 \geq 1$.

In some other embodiments of the present application, the i-th column vector $V_i$ of the codeword W is generated by the weighted sum of M column vectors:

$$V_i = \sum_{m=1}^{M} \beta_m u_m.$$

In the above formula, $\beta_m$ is a weighting coefficient, $u_m$ is a column vector satisfying the basis vector model u, i = 1, 2, ..., r, and m = 1, 2, ..., M.

Specifically, the column vector in the codeword W may be generated by the weighted sum of multiple column vectors. The column vectors participating in the weighted summation may be column vectors conforming to the basis vector model. The weighting coefficients corresponding to the column vectors participating in the weighted summation may be identical or different.

In some other embodiments of the present application, the i-th column vector $V_i$ of the codeword W is generated by the weighted sum of M column vectors:

$$V_i = \sum_{m=1}^{M} \beta_m w_m .$$

In the above formula, $\beta_m$ is a weighting coefficient, $w_m$ is formed by the Kronecker product of two column vectors $u_{m1}$ and $u_{m2}$, $u_{m1}$ and $u_{m2}$ are column vectors satisfying the basis vector model u, i = 1, 2, ..., r, and m = 1, 2, ..., M.

In this embodiment of the present application, the column vector in the codeword W may be generated by the weighted sum of multiple column vectors. The column vectors participating in the weighted summation may each be the Kronecker product of two column vectors conforming to the basis vector model. The weighting coefficients corresponding to the column vectors participating in the weighted summation may be identical or different.

In some embodiments of the present application, the i-th column vector $V_i$ of the codeword W satisfies:

$$V_i = \begin{bmatrix} c_1 V_{i1} \\ c_2 V_{i2} \\ \vdots \\ c_S V_{iS} \end{bmatrix} .$$

In the above formula, $c_s$ is a coefficient, $V_{is}$ is a sub-vector, s = 1, 2, ..., S. $V_{is}$ is generated in at least one of the following manners:

$V_{is}$ is generated by the basis vector model u;

$V_{is}$ is formed by the Kronecker product of two vectors $u_1$ and $u_2$, where $u_1$ and $u_2$ are column vectors satisfying the basis vector model u;

$V_{is}$ is generated by the weighted sum of M column vectors of the basis vector model through $V_{is} = \sum_{m=1}^{M} \beta_m u_m$, where $\beta_m$ is a weighting coefficient, $u_m$ is a column vector satisfying the basis vector model u, i = 1, 2, ..., r, and m = 1, 2, ..., M; or

$V_{is}$ is generated by the weighted sum of M column vectors of the basis vector model through $V_{is} = \sum_{m=1}^{M} \beta_m w_m$, where $\beta_m$ is a weighting coefficient, $w_m$ is formed by the Kronecker product of two column vectors $u_{m1}$ and $u_{m2}$, and $u_{m1}$ and $u_{m2}$ are column vectors satisfying the basis vector model u, where i = 1, 2, ..., r, and m = 1, 2, ..., M.

The coefficient $c_s$ may be a preset value. In a communication scenario, $c_s$ is a fixed constant, for example, $c_s$ = 1; or $c_s$ is a constant greater than 0 and less than 1 and increases as the sequence number s increases. In another communication scenario, $c_s$ is determined according to the indication information.

Specifically, the r column vectors forming the codeword W may include multiple sub-vectors. Each sub-vector has a corresponding coefficient. Each sub-vector may be implemented through the basis vector model. It is to be understood that generating the sub-vector by using the basis vector model includes, but is not limited to, at least one of the following: using the vector corresponding to the basis vector model as the sub-vector, using the Kronecker product of two vectors conforming to the basis vector model as the sub-vector, using the weighted sum of multiple vectors conforming to the basis vector model as the sub-vector, or using the weighted sum of multiple vectors as the sub-vector, where each vector is the Kronecker product of two vectors conforming to the basis vector model.

In this embodiment, the weighting coefficient $\beta_m$ may be a preset value. For example, in one case, the weighting coefficient satisfies $\sum_{m=1}^{M} \beta_m = 1$ and $\beta_m = 1/M$. For another example, in another case, the weighting coefficient $\beta_m$ is determined according to the value of M. For example, when M = 2, $\beta_1$ = 0.6, $\beta_2$ = 0.4; and when M = 3, $\beta_1$ = 0.5, $\beta_2$ = 0.3, $\beta_2$ = 0.2.

Further, based on the preceding embodiment of the present application, the basis vector model u is described.

In some embodiments of the present application, the k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

where $\theta_k$ is a real number, and j is an imaginary unit.

In this embodiment of the present application, when the length of the sub-vector of the basis vector model is 1, the sub-vector may be 1; and when the length of the sub-vector is greater than 1, the sub-vector may be $[1\ e^{j\theta_k} \ldots e^{j(N_k-1)\theta_k}]$, where $\theta_k$ is a real number, and j is an imaginary unit.

In some other embodiments of the present application, the k-th sub-vector $v_k$ of the basis vector model u is formed by the Kronecker product of two basis vectors $v_{k1}$ and $v_{k2}$. The two basis vectors each satisfy:

$$v_{kl} = \begin{cases} \begin{bmatrix} 1 & e^{j\theta_{kl}} & \cdots & e^{j(N_{kl}-1)\theta_{kl}} \end{bmatrix}, & N_{kl} > 1, \\ 1 & N_{kl} = 1, \end{cases}$$

where $\theta_{kl}$ is a real number, j is an imaginary unit, $l \in [1, 2]$, and $N_{k1} * N_{k2} = N_k$.

In this embodiment of the present application, the sub-vector of the basis vector model may be the Kronecker product of two basis vectors. The product of the lengths of the two basis vectors may be the length of the sub-vector of the basis vector model. When the length of the sub-vector is 1, the basis vector may be 1. When the length of the sub-vector is greater than 1, the basis vector may be $[1\ e^{j\theta_{kl}} \cdots e^{j(N_{kl}-1)\theta_{kl}}]$, where $\theta_{kl}$ is a real number, j is an imaginary unit, and $l \in [1, 2]$.

In some embodiments of the present application, the k-th sub-vector $v_k$ of the basis vector model u satisfies:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2\zeta_k$, $\xi_k$, $\eta_k$, and $\zeta_k$ are each a preset real-valued constant, j is an imaginary unit, and $1 \leq n \leq N_k$.

Specifically, when the length of the sub-vector of the basis vector model is greater than 1, the value is determined according to $\begin{bmatrix} 1 & e^{j\theta_k^{(1)}} & \cdots & e^{j\theta_k^{(N_k-1)}} \end{bmatrix}$, and $\theta_k^{(n)}$ may be determined according to $\theta_k^{(n)} = \xi_k + n\eta_k + n^2\zeta_k$ and three preset real-valued constants $\xi_k$, $\eta_k$, and $\zeta_k$.

In some embodiments of the present application, the k-th sub-vector $v_k$ of the basis vector model u is formed by the Kronecker product of two basis vectors $v_{k1}$ and $v_{k2}$. The two basis vectors each satisfy:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}, & N_{kl} > 1, \\ 1, & N_{kl} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are each a preset real-valued constant, j is an imaginary unit, $l \in [1,2]$, $1 \leq n \leq N_{kl}$, and $N_{k1} * N_{k2} = N_k$.

Specifically, the sub-vector of the basis vector model is the Kronecker product of two basis vectors. When the length of the sub-vector is greater than 1, the values of the two basis vectors may be each determined according to $\begin{bmatrix} 1 & e^{j\theta_{kl}^{(1)}} & \cdots & e^{j\theta_{kl}^{(N_{kl}-1)}} \end{bmatrix}$, where $\theta_k^{(n)}$ may be determined according to $\theta_k^{(n)} = \xi_k + n\eta_k + n^2\zeta_k$ and three preset real-valued constants $\xi_k$, $\eta_k$, and $\zeta_k$.

Further, based on the preceding embodiment of the present application, the k-th sub-vector coefficient $\alpha_k$ of the basis vector model u is determined according to at least one sub-vector in the sub-vector set $[v_1, v_2, \cdots, v_K]$.

Specifically, the sub-vector coefficient in the basis vector model u may be determined according to the corresponding sub-vector. It is to be understood that the sub-vector coefficient may be determined according to one or more sub-vectors.

Further, based on the preceding embodiment of the present application, the k-th sub-vector $v_k$ of the basis vector model u is determined according to at least one coefficient in the coefficient set $[\alpha_1, \alpha_2, \cdots, \alpha_k]$.

In this embodiment of the present application, the sub-vector of the basis vector model may be determined according to one or more coefficients in the basis vector model.

Further, based on the preceding embodiment of the present application, the sub-vector coefficient $\alpha_k$ is determined according to $\alpha_{k-1}$ and $v_{k-1}$.

In this embodiment of the present application, a sub-vector coefficient in the basis vector model may be determined according to its previous sub-vector coefficient and the sub-vector corresponding to the previous sub-vector coefficient. It is to be understood that the sequence may be the sequence of the sub-vector coefficients in the basis vector model.

Further, based on the preceding embodiment of the present application, the sub-vector coefficient $\alpha_k$ is determined according to $\alpha_{k-1}$, $v_{k-1}$, and $v_k$.

Specifically, a sub-vector coefficient in the basis vector model may be determined according to its previous sub-vector coefficient, the sub-vector corresponding to the previous sub-vector coefficient, and the sub-vector corresponding to the current sub-vector coefficient.

Further, based on the preceding embodiment of the present application, the sub-vector $v_{k-1}$ is determined according to $v_k$ and $\alpha_k$.

Specifically, the sub-vector in the basis vector model and the previous sub-vector of the sub-vector may be determined according to the sub-vector coefficient of the sub-vector.

In an example embodiment, FIG. 6 is an example diagram of a channel information feedback method according to embodiments of the present application. Using a second communication node implementing the method of this embodiment of the present application as an example, generally, the second communication node may be a base station, a mobile terminal, an Internet of Things node, or other communication nodes capable of transmitting and receiving information. Referring to FIG. 6, the method of this embodiment of the present application includes the following operations:

In S1, a reference signal sent by a first communication node is received, and channel estimation is performed according to the received reference signal so that channel information is obtained.

The reference signal may be a pilot signal used for channel estimation. The signal is a known signal sequence. The sequence may be denoted as s. The received signal may be represented as:

$$y = Hs + n.$$

In the above formula, H is a channel matrix, y is a received signal vector, and n is a noise vector.

The channel estimation may be performed through, for example, the minimum mean squared error or the linear minimum mean squared error so that the channel matrix H is obtained. Since generally the dimension of H is large, directly feeding back H to the first communication node would result in a large overhead, and therefore generally the channel information is required to be quantized.

In S2, the codebook for feedback is determined according to the obtained channel information.

The codebook is a codeword set. The codeword set includes multiple codewords used for configuring a precoding of a MIMO array. All codewords of the codebook may be generated according to the basis vector model u of the present application, or some codewords of the codebook may be generated by using other models.

According to different transmission scenarios and transmission requirements, multiple codebooks are generally preset. It is required to determine an appropriate codebook according to the obtained channel information. For example, the maximum number of transmission layers of the current channel may be determined based on the rank of the channel matrix H or the corresponding channel quality indication information so that an applicable codebook can be determined.

In S3, a codeword is determined from the selected codebook to represent the current channel.

Specifically, a codebook is actually a quantized form of spatial channels, a codeword included in the codebook represents information about one of the spatial channels, and it is required to select a codeword matching the current channel from the codebook, where the selected codeword is used for information transmission.

In this embodiment of the present application, the codeword may be constructed based on the basis vector model, the codeword is an N-by-r matrix including r column vectors $V_1$, $V_2$, ..., $V_r$. Each column vector has a length of N. N > 1. The value of r may be obtained from the basis vector model. The basis vector model is represented as follows:

$$u = \begin{bmatrix} \alpha_1 v_1 \\ \alpha_2 v_2 \\ \vdots \\ \alpha_K v_K \end{bmatrix}.$$

The basis vector model may include a sub-vector $v_k$ and a sub-vector coefficient $\alpha_k$. k = 1, 2, ..., K. The length of the sub-vector $v_k$ is $N_k$. The sum of the lengths of the sub-vectors is N. Each sub-vector in the basis vector model may correspond to the precoding matrix of one subarray. The sub-vector $v_k$ denotes a precoding vector for array beam manipulation. The MIMO array may radiate a directional beam in a specified direction or radiate a set of directional beams in specified directions through the precoding vector. The sub-vector coefficient $\alpha_k$ can achieve phase alignment among different subarrays within the MIMO array. The product of a sub-vector and the corresponding sub-vector coefficient may be used as the actual precoding vector of a subarray in the MIMO array. The basis vector model may satisfy the following condition: A sub-vector may be determined according to another sub-vector, or a sub-vector may be determined according to a sub-vector coefficient, and a sub-vector coefficient may be determined according to another sub-vector coefficient, or a sub-vector coefficient may be determined according to a sub-vector.

The sub-vector of the basis vector model may satisfy at least one of the following manners:

1. The k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}^T, & N_k > 1, \\ 1, & N_k = 1, \end{cases}$$

where $\theta_k$ is a real number, j is an imaginary unit, and the superscript T denotes transposition.

2. The k-th sub-vector $v_k$ of the basis vector model u satisfies:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2\zeta_k$, $\xi_k, \eta_k,$ and $\zeta_k$ are each a preset real-valued constant, j is an imaginary unit, and $1 \le n \le N_k$.

3. The k-th sub-vector $v_k$ of the basis vector model u is formed by the Kronecker product of two basis vectors $v_{k1}$ and $v_{k2}$:

$$v_k = v_{k1} \otimes v_{k2}.$$

In the above formula, the operator $\otimes$ denotes a Kronecker product, and $v_{k1}$ and $v_{k2}$ represent two basis vectors that satisfy:

$$v_{k1} = \begin{cases} \begin{bmatrix} 1 & e^{j\theta_{k1}} & \cdots & e^{j(N_{k1}-1)\theta_{k1}} \end{bmatrix}^T, & N_{k1} > 1, \\ 1, & N_{k1} = 1, \end{cases}$$

$$v_{k2} = \begin{cases} \begin{bmatrix} 1 & e^{j\theta_{k2}} & \cdots & e^{j(N_{k2}-1)\theta_{k2}} \end{bmatrix}^T, & N_{k2} > 1, \\ 1, & N_{k2} = 1, \end{cases}$$

where $\theta_{k1}$ and $\theta_{k2}$ are given constants, $N_k = N_{k1} * N_{k2}$, and j is an imaginary unit.

4. The k-th sub-vector $v_k$ of the basis vector model u is formed by the Kronecker product of two basis vectors $v_{k1}$

and $v_{k2}$:

$$v_k = v_{k1} \otimes v_{k2}.$$

In the above formula, the operator $\otimes$ denotes a Kronecker product and $v_{k1}$ and $v_{k2}$ represent two basis vectors that satisfy:

$$v_{k1} = \begin{cases} \begin{bmatrix} 1 & e^{j\theta_{k1}^{(1)}} & \cdots & e^{j\theta_{k1}^{(N_{k1}-1)}} \end{bmatrix}, & N_{k1} > 1, \\ 1, & N_{k1} = 1, \end{cases}$$

$$v_{k2} = \begin{cases} \begin{bmatrix} 1 & e^{j\theta_{k2}^{(1)}} & \cdots & e^{j\theta_{k2}^{(N_{k2}-1)}} \end{bmatrix}, & N_{k2} > 1, \\ 1, & N_{k2} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are each a preset real-valued constant, j is an imaginary unit, $l \in [1,2]$, $1 \leq n \leq N_{kl}$, and $N_k = N_{k1} * N_{k2}$.

The sub-vector coefficient $\alpha_k$ in the basis vector model is used to determine the initial phase and amplitude of the precoding of the k-th subarray $v_k$. The coefficient $\alpha_k$ in the basis vector model may be written in an exponential form $\alpha_k = a_k e^{j\varphi k}$, where $a_k$ is the amplitude of the coefficient, and $\varphi_k$ is the phase of the coefficient. In some embodiments of the present application, $a_m$ may be fixed to a unit amplitude, that is, $\alpha_m = e^{j\varphi m}$, which is a unit complex number. The coefficient of the sub-vector may determine the initial phase of the subarray. The coefficient $\alpha_1$ may determine the arrival phase at the receiving point when the column vector V is used as precoding. Generally, $\alpha_1 = 1$ may be preset, simplifying the model and reducing the feedback overhead. However, in some complex scenarios, it is required to configure proper $\alpha_1$ to obtain a better beamforming gain.

Further, to satisfy the requirements of the MIMO phased array, an association exists between a sub-vector coefficient and a sub-vector in the basis vector model. The phased array achieves beamforming based on the principle of in-phase superposition. To achieve in-phase superposition of the electromagnetic signals radiated by radiators along a specified direction, the initial phases of two adjacent sub-vectors have an association. Under a given amplitude, a sub-vector can determine the coefficient, and vice versa. Therefore, in the model u, associations exist between the sub-vectors, between the sub-vector coefficients, and between the sub-vectors and their coefficients. Since the spatial position relationships between the subarrays of the MIMO array are fixed, each subarray corresponds to a sub-vector in u. The associations between the sub-vectors and their coefficients can be derived based on the spatial position relationships between the subarrays.

Specifically, the set $FS=[v_1,v_2,\cdots,v_K,\alpha_1,\alpha_2,\cdots,\alpha_K]$ including sub-vectors and coefficients of the sub-vectors in the basis vector model includes at least two subsets $FS_1$ and $FS_2$. One of the two subsets may determine the other. $FS_1$ includes at least one element in the sub-vector set $[v_1,v_2,\cdots,v_K]$. $FS_2$ includes at least one element in the sub-vector coefficient set $[\alpha_1,\alpha_2,\cdots,\alpha_K]$. Correspondingly, the feedback overhead of the fed-back indication information of the codeword W may be reduced in the following manner: One indication parameter indicates at least one sub-vector and one sub-vector coefficient in the set FS simultaneously, or one indication parameter in the indication information indicates at least two sub-vectors in the set FS simultaneously, or one indication parameter in the indication information indicates at least two sub-vector coefficients in the set FS simultaneously.

In this embodiment of the present application, one of the two subsets may determine the other in at least one of the following manners:

    1. The sub-vector set determines the sub-vector coefficient set.

        (1) In the basis vector model u, all of the sub-vector coefficients may be determined according to all of the sub-vectors, and the k-th sub-vector coefficient $\alpha_k$ may be determined according to the sub-vector $v_k$ according to the following formula:

$$\alpha_k = e^{j\arg(v_{k,1})}e^{j\beta}.$$

In the above formula, β is a preset value, $v_{k,1}$ denotes the first element of the k-th sub-vector, and the function arg (z) denotes calculation of the argument of the complex z.

(2) $\alpha_1$ is a preset value. For example, $\alpha_1$ =1. Other sub-vector coefficients are determined according to the following formula:

$$\alpha_k = e^{j \arg(v_{k-1,N_{k-1}})} e^{j\beta} .$$

In the above formula, $N_{k-1}$ is the number of elements of $v_{k-1}$, $v_{k-1,N_{k-1}}$ denotes the last element of the sub-vector $v_{k-1}$, and the function arg (z) denotes calculation of the argument of the complex z.

(3) The sub-vector coefficients of the basis vector model u may be determined according to sub-vectors. Among the K sub-vector coefficients, the first K/2 sub-vector coefficients are preset values, and the last K/2 sub-vector coefficients may be determined according to the following formula:

$$\alpha_{K/2+k} = e^{j \arg(v_{k,N_k})} e^{j\beta} .$$

In the above formula, $v_{k,N_k}$ denotes the last element of the sub-vector $v_{k-1}$.

(4) The value set of the sub-vector coefficients of the model u is determined according to the values of the sub-vectors. Table 1 shows a typical example, where the k-th sub-vector $v_k$ of u may be valued in $[ v_k^{(1)}, v_k^{(2)}, v_k^{(3)} ]$, and each value of $v_k$ corresponds to a value set of $\alpha_k$. That is, after $v_k$ is determined, the value range of the corresponding coefficient $\alpha_k$ is determined. For example, when the value of $v_k$ is $v_k^{(3)}$, the value of $\alpha_k$ can be only one of the values in the set $[ \alpha_k^{(31)}, \alpha_k^{(32)} ]$.

Table 1 Example table of sub-vector coefficients determined according to sub-vectors

| Value of $v_k$ | | | $v_k^{(1)}$ | | $v_k^{(2)}$ | | $v_k^{(3)}$ | |
|---|---|---|---|---|---|---|---|---|
| Value of $\alpha_k$ | $\alpha_k^{(11)}$ | $\alpha_k^{(12)}$ | $\alpha_k^{(13)}$ | $\alpha_k^{(21)}$ | $\alpha_k^{(22)}$ | $\alpha_k^{(23)}$ | $\alpha_k^{(31)}$ | $\alpha_k^{(32)}$ |

The value range of $\alpha_k$ may also be determined according to multiple sub-vectors simultaneously. This is not repeated here.

2. The sub-vector coefficient set determines the sub-vector set.

(1) In the basis vector model u, all of the sub-vectors are determined according to all of the sub-vector coefficients.

For example, the k-th sub-vector coefficient of the basis vector u may be written in the form of $\alpha_k = a_k e^{j(\varphi_{k1}+\varphi_{k2})}$. The (k - 1)-th sub-vector $v_{k-1} = [1,e^{j\varphi_{k1}},e^{j2\varphi_{k1}},...,e^{j(N_{k-1}-1)\varphi_{k1}}]^T$ may be determined according to the parameter $\varphi_{k1}$ of the coefficient.

For another example, the k-th sub-vector coefficient of the basis vector u may be written as $\alpha_k = a_k e^{j(\varphi_{k1}+\varphi_{k2}+\varphi_{k3})}$. The (k - 1)-th sub-vector $v_{k-1} = [1,e^{j\varphi_{k1}},e^{j2\varphi_{k1}},\cdots,e^{j(N_{k-1}-1)\varphi_{k1}}]^T$ and the k-th sub-vector $v_k = [1, e^{j\varphi_{k2}},e^{j2\varphi_{k2}},\cdots,e^{j(N_{k-1})\varphi_{k2}}]^T$ may be determined according to the parameters $\varphi_{k1}$ and $\varphi_{k2}$ of the coefficient, where $2 \leq k \leq K$.

(2) In the basis vector model u, a part of the sub-vectors is determined according to a part of the sub-vector coefficients. For example, in some communication scenarios, some sub-vectors are preset values, and other sub-vectors may be determined according to sub-vector coefficients according to the method similar to the previous embodiment.

(3) The value set of the sub-vectors of the basis vector model u is determined according to the values of the sub-vector coefficients. Table 2 shows a typical example, where the k-th sub-vector $\alpha_k$ of u may be valued in $[ \alpha_k^{(1)}, \alpha_k^{(2)}, \alpha_k^{(3)} ]$, and each value of $\alpha_k$ corresponds to a value set of $v_k$. That is, after $\alpha_k$ is determined, the value range of the corresponding sub-vector $v_k$ is determined. For example, when the value of $\alpha_k$ is $\alpha_k^{(3)}$, the value of $\alpha_k$ can be

only one of the values in the set $\left[ v_k^{(31)}, v_k^{(32)} \right]$.

Table 2 Example table of sub-vectors determined according to sub-vector coefficients

| $\alpha_k$ | $\alpha_k^{(1)}$ | | | $\alpha_k^{(2)}$ | | | $\alpha_k^{(3)}$ | |
|---|---|---|---|---|---|---|---|---|
| $v_k$ | $v_k^{(11)}$ | $v_k^{(12)}$ | $v_k^{(13)}$ | $v_k^{(21)}$ | $v_k^{(22)}$ | $v_k^{(23)}$ | $v_k^{(31)}$ | $v_k^{(32)}$ |

The value range of $v_k$ may also be determined according to multiple sub-vector coefficients simultaneously. This is not repeated here.

3. Some sub-vectors and their sub-vector coefficients determine other sub-vectors or their sub-vector coefficients.

(1) The k-th coefficient $\alpha_k$ of the basis vector model u is determined according to at least one matrix and one coefficient in the sub-vector set $[v_1, v_2, \cdots, v_k, \alpha_1, \alpha_2, \cdots, \alpha_{k-1}]$. In some communication scenarios, $\alpha_1$ is a preset value, and the k-th coefficient $\alpha_k$ is determined according to $\alpha_{k-1}$ and $v_{k-1}$, where $2 \leq k \leq K$.

(2) The sub-vector coefficient of the k-th sub-vector may be determined according to the sub-vector $v_{k-1}$ and its sub-vector coefficient according to:

$$\alpha_k = \alpha_{k-1} e^{j \arg(v_{k-1, N_{k-1}})} e^{j\beta}.$$

In the above formula, $\beta$ is a preset constant.

(3) The sub-vector coefficient of the basis vector model is determined according to the sub-vector $v_{k-1}$ and its sub-vector coefficient according to the following formula:

$$\alpha_k = \alpha_{k-1} e^{j \arg(v_{k-1}[N_{k-1}])} e^{j\Delta\phi_{k-1}} e^{j\beta}.$$

In the above formula, $\Delta\phi_{k-1} = \arg(v_{k-1,s}) - \arg(v_{k-1,s-1})$ denotes the phase difference between any two adjacent elements in $v_{k-1}$, and $1 \leq s \leq N_{k-1}$.

(4) The sub-vector coefficient $\alpha_k$ in the basis vector model is determined according to the sub-vector coefficient $\alpha_{k-1}$, the sub-vector $v_{k-1}$, and the sub-vector $v_k$. $\alpha_k$ may be determined according to the following formula:

$$\alpha_k = \alpha_{k-1} e^{j \arg(v_{k-1, N_{k-1}})} e^{j\Delta\phi_k} e^{j\beta}.$$

In the above formula, $\Delta\phi_k = \arg(v_{k,s}) - \arg(v_{k,s-1})$ denotes the phase difference between any two adjacent elements in $v_k$, and $\beta$ is a preset constant.

(5) The sub-vector coefficient $\alpha_k$ in the basis vector model may be determined according to the following formula:

$$\alpha_k = \alpha_{k-1} e^{j \arg(v_{k-1, N_{k-1}}])} e^{j(\Delta\phi_{k-1} + \Delta\phi_k)/2} e^{j\beta}.$$

In the above formula, $\Delta\phi_{k-1}$ and $\Delta\phi_k$ denote the phase difference between any two adjacent elements in $v_{k-1}$ and the phase difference between any two adjacent elements in $v_k$ respectively.

4. Some sub-vectors and some sub-vector coefficients determine other sub-vectors and sub-vector coefficients.

(1) The column vector V of the codeword includes two sub-vectors $v_1$ and $v_2$, that is, K = 2. $v_2$ and $\alpha_2$ may be determined according to $v_1$. A typical example is that two corresponding sub-vectors may be constructed by using the same basis vector, but the phase difference caused by the displacement between two subarrays is required to be aligned by subarray coefficients. In view of $v_1 = [1, e^{j\theta_1}, e^{j2\theta_1}, ..., e^{j(N_1-1)\theta_1}]^T$, the phase gradient between adjacent elements of $v_1$ is $\theta_1$. Thus $\alpha_2 = e^{j(N_1\theta_1+\beta)}$ is determined based on the phase of the last element of $v_1$, and the sub-vector $v_2 = [1, e^{j\theta_1}, e^{j2\theta_1}, \cdots, e^{j(N_2-1)\theta_1}]^T$ is determined based on the phase gradient $\theta_1$ of $v_1$, where $\beta$ is the phase difference caused by the displacement of a subarray. In another example, for some specially shaped MIMO arrays, or when the receiving end is located on the near-field normal of the MIMO array, sub-vectors corresponding to two subarrays have phase gradients with opposite signs. Similarly, in view of $v_1 = [1, e^{j\theta_1}, e^{j2\theta_1}, \cdots, e^{j(N_1-1)\theta_1}]^T$, $v_2 = [1, e^{-j\theta_1}, e^{-j2\theta_1}, \cdots, e^{-j(N_2-1)\theta_1}]^T$ and $\alpha_2 = e^{j(N_1\theta_1+\beta)}$ can be determined based on the phase gradient $\theta_1$ between adjacent elements in $v_1$.

(2) The column vector V of the codeword includes 2K sub-vectors. The phase gradients of the first K sub-vectors are associated with the phase gradients of the last K sub-vectors, so that the last K sub-vectors and their coefficients can be determined according to the first K sub-vectors and their coefficients. For example, in some scenarios, the phase gradient of the k-th sub-vector differs from the phase gradient of the (K + k)-th sub-vector by a constant, so the (K + k)-th sub-vector may be determined according to the k-th sub-vector. In view of $v_k = [1, e^{j\theta_k}, e^{j2\theta_k}, \cdots, e^{j(N_k-1)\theta_k}]^T$ and $\alpha_k = a_k v_{k-1}[N_{k-1}]$, $v_{K+k} = [1, e^{j(\theta_k-\psi_k)}, e^{j2(\theta_k-\psi_k)}, \cdots, e^{j(N_k-1)(\theta_k-\psi_k)}]^T$ and $\alpha_{K+k} = a_K v_{K+k-1}[N_{K+k-1}]e^{j\beta}$ can be determined according to the phase gradients $\theta_k$ and $\alpha_k$ of $v_k$. $k \leq K$. $v_{k-1}[N_{k-1}]$ and $v_{K+k-1}[N_{K+k-1}]$ denote the last element of $v_{k-1}$ and the last element of $v_{K+k-1}$ respectively. $\Psi_k$ is a preset phase.

This embodiment is particularly applicable to the case where the sub-vectors conform to an equal phase gradient.
In this embodiment, the preset phase $\beta$ may be a predetermined constant. For example, $\beta = 0$ in some cases or $\beta = \pi$ in other cases. $\beta$ may also be set to another constant based on the actual situation. In some other cases, $\beta$ may also be determined according to the indication information or the received configuration information.
In this embodiment of the present application, the codeword includes r column vectors. Each column vector may be constructed based on a basis vector model. In this embodiment of the present application, the column vector may be constructed in at least one of the following manners:

1. The column vector of the codeword W conforms to the basis vector model u. That is, the i-th column vector $V_i$ of the codeword W satisfies:

$$V_i = u_i = \begin{bmatrix} \alpha_{i1}v_{i1} \\ \alpha_{i2}v_{i2} \\ \vdots \\ \alpha_{iK}v_{iK} \end{bmatrix}.$$

In the above formula, $u_i$ satisfies the structure of the basis vector model u, and i = 1, 2, ..., r.
2. The i-th column vector $V_i$ of the codeword W is fomred by the Kronecker product of two vectors $u_{i1}$ and $u_{i2}$. $V_i = u_{i1} \otimes u_{i2}$. $u_{i1}$ and $u_{i2}$ satisfy the structure of the basis vector model u:

$$u_{i1} = \begin{bmatrix} \alpha_{i1,1}v_{i1,1} \\ \alpha_{i1,2}v_{i1,2} \\ \vdots \\ \alpha_{i1,K1}v_{i1,K1} \end{bmatrix}, u_{i2} = \begin{bmatrix} \alpha_{i2,1}v_{i2,1} \\ \alpha_{i2,2}v_{i2,2} \\ \vdots \\ \alpha_{i2,K2}v_{i2,K2} \end{bmatrix}.$$

In the above formula, $K_1 \geq 1$ and $K_2 \geq 1$.
3. The i-th column vector $V_i$ of the codeword W is generated by the weighted sum of M column vectors:

$$V_i = \sum_{m=1}^{M} \beta_m u_m.$$

In the above formula, $\beta_m$ is a weighting coefficient, and $u_m$ satisfies the basis vector model u:

$$u_m = \begin{bmatrix} \alpha_{m1} v_{m1} \\ \alpha_{m2} v_{m2} \\ \vdots \\ \alpha_{mK_m} v_{mK_m} \end{bmatrix}.$$

In the above formula, m = 1, 2, ..., M, and $K_m$ is the number of sub-vectors of $u_m$.

4. The i-th column vector $V_i$ of the codeword W is generated by the weighted sum of M column vectors:

$$V_i = \sum_{m=1}^{M} \beta_m w_m.$$

In the above formula, $\beta_m$ is a weighting coefficient, $w_m$ is formed by the Kronecker product of two column vectors $u_{m1}$ and $u_{m2}$, $u_{m1}$ and $u_{m2}$ satisfy the basis vector model u. i = 1, 2, ..., r, and m = 1, 2, ..., M.

5. The i-th column vector $V_i$ of the codeword W includes S column vectors:

$$V_i = \begin{bmatrix} c_1 V_{i1} \\ c_2 V_{i2} \\ \vdots \\ c_S V_{iS} \end{bmatrix}.$$

In the above formula, $c_s$ is a preset coefficient, $V_{is}$ is constructed in at least one of the preceding construction manners, S > 1, and $1 \le s \le S$.

Generating the sub-vector $V_{is}$ by using the basis vector model includes, but is not limited to, at least one of the following: using the vector corresponding to the basis vector model as the sub-vector, using the Kronecker product of two vectors conforming to the basis vector model as the sub-vector, using the weighted sum of multiple vectors conforming to the basis vector model as the sub-vector, or using the weighted sum of multiple vectors as the sub-vector, where each vector is the Kronecker product of two vectors conforming to the basis vector model.

The coefficient $c_s$ may be a preset value. In a communication scenario, $c_s$ is a fixed constant, for example, $c_s = 1$; or $c_s$ is a constant greater than 0 and less than 1 and increases as the sequence number s increases. In another communication scenario, $c_s$ is determined according to the indication information.

The codeword constructed based on the column vector model can be used to form a precoding codebook for beam manipulation of the MIMO array. One codeword is selected for configuration of the precoding of the MIMO array so that the MIMO array can radiate electromagnetic signals in a direction or a set of directions, thereby achieving beam manipulation of the MIMO array.

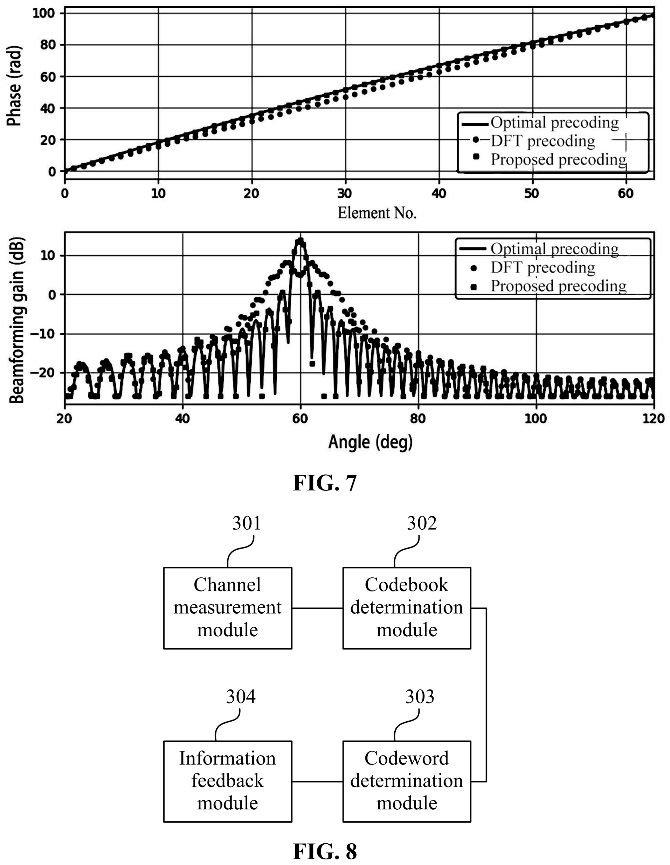

The codeword of this embodiment of the present application can divide the array precoding vector into multiple sub-vectors to characterize the channel information more precisely, thereby achieving a higher beamforming gain than the precoding constructed based on the codeword model in an existing standard. Referring to FIG. 7, the precoding includes four sub-vectors. The length of each sub-vector is 16. The four sub-vectors and corresponding coefficients are listed in Tables 3 and 4. The precoding is applied to a 64-element linear array. The receiving end is located in the near-field region of the array. Compared with discrete Fourier transform (DFT) precoding used in an existing standard, precoding constructed by using a codeword model in the present application is closer to optimal precoding, so a beamforming gain generated by the precoding is also close to the optimal gain and is about 6 dB higher than the gain of precoding in an existing standard.

Table 3 Four sub-vectors of the precoding vector in the codeword

| $v_1$ | 1 | $e^{j1.77}$ | $e^{j3.55}$ | $e^{j5.33}$ | $e^{j7.11}$ | $e^{j8.88}$ | $e^{j10.66}$ | $e^{j12.44}$ | $e^{j14.21}$ | $e^{j15.99}$ | $e^{j17.76}$ | $e^{j19.54}$ | $e^{j21.32}$ | $e^{j23.09}$ | $e^{j24.87}$ | $e^{j26.65}$ |
|---|---|---|---|---|---|---|---|---|---|---|---|---|---|---|---|---|
| $v_2$ | 1 | $e^{j1.64}$ | $e^{j3.29}$ | $e^{j4.93}$ | $e^{j6.57}$ | $e^{j8.21}$ | $e^{j9.86}$ | $e^{j11.5}$ | $e^{j13.14}$ | $e^{j14.78}$ | $e^{j16.43}$ | $e^{j18.07}$ | $e^{j19.71}$ | $e^{j21.36}$ | $e^{j23.0}$ | $e^{j24.64}$ |
| $v_3$ | 1 | $e^{j1.5}$ | $e^{j2.99}$ | $e^{j4.49}$ | $e^{j5.98}$ | $e^{j7.48}$ | $e^{j8.97}$ | $e^{j10.47}$ | $e^{j11.96}$ | $e^{j13.46}$ | $e^{j14.95}$ | $e^{j16.43}$ | $e^{j17.95}$ | $e^{j19.44}$ | $e^{j20.94}$ | $e^{j22.43}$ |
| $v_4$ | 1 | $e^{j1.33}$ | $e^{j2.66}$ | $e^{j4.0}$ | $e^{j5.34}$ | $e^{j6.67}$ | $e^{j8.0}$ | $e^{j9.34}$ | $e^{j10.67}$ | $e^{j12.0}$ | $e^{j13.34}$ | $e^{j14.68}$ | $e^{j16.01}$ | $e^{j17.34}$ | $e^{j18.68}$ | $e^{j20.01}$ |

Table 4 Four sub-vector coefficients of the precoding vector in the codeword

| $\alpha_1$ | $\alpha_2$ | $\alpha_3$ | $\alpha_4$ |
|---|---|---|---|
| 1 | e^j28.42 | e^j54.71 | e^j78.63 |

In S4, indication information corresponding to the selected codeword is fed back to the first communication node.

Specifically, since one codeword in the codebook includes one or more precoding vectors, directly feeding back the codeword incurs a large channel resource overhead. The channel overhead of the codeword feedback can be reduced through the indication information. The indication information indicates the codeword. It is to be understood that in this embodiment of the present application, the codeword may be obtained through the basis vector model. The basis vector model includes sub-vectors and sub-vector coefficients. A sub-vector or sub-vector coefficient may be determined according to another sub-vector or sub-vector coefficient. That is, in the set FS formed by sub-vectors and sub-vector coefficients in the basis vector model, at least one subset $FS_1$ is determined according to at least one subset $FS_2$. The indication information indicating the codeword may be a number or other identifiers. In an example embodiment, using the indication information of numbers as an example, the indication information includes numbers [2, 1, 1, 2, 4], and the corresponding codeword is $W_{1,1;2,4}^{(2)}$ , indicating that the codeword is from the No. 2 codebook and includes two column vectors, where each column vector includes two sub-column vectors. The two sub-vectors of the first column vector and their coefficients are determined according to the indication parameters [1, 1]. The two sub-vectors of the second column vector and their coefficients are determined according to the indication parameters [2, 4]. When equal-phase-gradient precoding is used for the sub-vectors of the codeword W, the four indication parameters may be in one-to-one correspondence with the phase gradients. For example, Table 5 shows phase gradients corresponding to indication information with numbers. The indication parameters in the indication information can correspond to the phase gradients by using the table, and then a required codeword can be generated.

Table 5 Relationships between indication parameters and phase gradients

| No. | 1 | 2 | 3 | 4 | 5 | 6 | 7 | 8 | 9 |
|---|---|---|---|---|---|---|---|---|---|
| Phase Gradient | $(1-1)\pi/8$ | $(2-1)\pi/8$ | $(3-1)\pi/8$ | $(4-1)\pi/8$ | $(5-1)\pi/8$ | $(6-1)\pi/8$ | $(7-1)\pi/8$ | $(8-1)\pi/8$ | $(9-1)\pi/8$ |

In an example embodiment, one codeword includes two column vectors, each column vector includes two sub-vectors, and each sub-vector has a length of 3. Assuming that the coefficient of the first sub-vector of each column vector is 1, and the coefficient of the second sub-vector is determined according to the last element of the previous sub-vector, then the indication information requires only four indication parameters for determining the four sub-vectors to obtain a corresponding codeword. One feasible codeword $W_{2,5,6,7}$ satisfies:

$$W_{2,5,6,7} = \begin{pmatrix} \begin{pmatrix} 1 \\ e^{j\pi/8} \\ e^{j2\pi8} \end{pmatrix} & \begin{pmatrix} 1 \\ e^{j5\pi/8} \\ e^{j2*5\pi/8} \end{pmatrix} \\ e^{j2\pi8}\begin{pmatrix} 1 \\ e^{j\pi/2} \\ e^{j2\pi/2} \end{pmatrix} & e^{j2*5\pi/8}\begin{pmatrix} 1 \\ e^{j3\pi/4} \\ e^{j2*3\pi/4} \end{pmatrix} \end{pmatrix}.$$

In this embodiment of the present application, since there exists an association between the sub-vectors and the coefficients in the base vector model u, the feedback method proposed herein can use less indication information for channel feedback, thereby reducing the time-frequency resource overhead. For example, the subscripts 2, 5, 6, and 7 of $W_{2,5,6,7}$ can be used as indication information for feedback. In addition, the column vector in the codeword is split into multiple sub-vectors, thereby providing finer channel information and bringing a larger beamforming gain. The preceding is an example of feasible indication information. Other suitable formats may also be used in actual application. This is not limited here.

Each column vector in the codeword model proposed in the present application contains sub-vectors and their coefficients. There exist associations between these sub-vectors and coefficients, a part of the sub-vectors and a part of the sub-vector coefficients can determine the remaining parts. Therefore, an indication parameter in the indication information can indicate multiple elements in the codeword simultaneously. The indication parameter may be a single indication number or a set of indication numbers. For example, [1, 1] in $W_{1,1;2,4}^{(2)}$ can represent two separate indication parameters or a single indication parameter. Because there are generally multiple actually preset codebooks, the feedback information may also include indication information of the codeword. For example, the superscript 2 of $W_{1,1;2,4}^{(2)}$ can indicate that the codeword belongs to the No. 2 codebook.

In an embodiment, the column vector of the codeword satisfies the form of the basis vector model u, and the indication information of the codeword includes at least one indication parameter, an indication parameter indicates at least two elements in the set FS. FS is a set formed by sub-vectors and sub-vector coefficients of one column vector of the codeword. For example, one codeword has the following form:

$$W_{a,b;l,m,n;c,d;p,q}^{(s)} = \begin{pmatrix} V_1 & V_2 \end{pmatrix} = \begin{pmatrix} \alpha_a v_l & \alpha_c v_p \\ \alpha_b v_m & \alpha_d v_p \\ \alpha_b v_n & \alpha_q v_q \end{pmatrix}.$$

The column vectors $V_1$ and $V_2$ satisfy $V_1 = (\alpha_a v_l\, \alpha_b v_l\, \alpha_c v_m)^T, V_2 = (\alpha_d v_p\, \alpha_e v_p\, \alpha_f v_q)^T$. The two column vectors both satisfy the form of the basis vector u. The codeword form indicates that 2-layer transmission is supported. Each transmission layer of precoding vector includes three sub-vectors, meaning that the MIMO array is divided into three subarrays.

The indication information of the codeword includes the superscript s indicating the codebook information and subscripts a, b, l, m, n, c, d, p, and q indicating the column vector information of the codeword. The indication parameter b indicates the last two sub-coefficients of the column vector $V_1$ of the codeword. The indication parameter p indicates the first two sub-vectors of the column vector $V_2$ of the codeword. The indication parameter q indicates the last sub-vector and the coefficient of the vector simultaneously. For a more general case, one indication parameter in the indication information can indicate two or more elements in the set FS.

In another embodiment, the column vector of the codeword may be constructed by the Kronecker product of two vectors satisfying the basis vector model u. For example, the i-th column vector $V_i$ of the codeword may be represented as follows:

$$V_i = u_1 \otimes u_2 = \begin{pmatrix} \alpha_{11} v_{11} \\ \alpha_{12} v_{21} \\ \alpha_{13} v_{31} \end{pmatrix} \otimes \begin{pmatrix} \alpha_{21} v_{21} \\ \alpha_{22} v_{22} \\ \alpha_{23} v_{23} \end{pmatrix}.$$

According to the associations between sub-vectors and sub-vector coefficients in the basis vector, an indication parameter of at least one indication parameter in the indication information may indicate two elements in the set FS. The set FS includes sub-vectors and sub-vector coefficients in $u_1$ or $u_2$.

In another embodiment, the column vector of the codeword is obtained by the weighted sum of several column vectors satisfying the basis vector model u. For example, the i-th column vector $V_i$ of the codeword is as follows:

$$V_i = 0.6u_1 + 0.3u_2 + 0.1u_3 = 0.6\begin{pmatrix} \alpha_{11} v_{11} \\ \alpha_{12} v_{21} \end{pmatrix} + 0.3\begin{pmatrix} \alpha_{21} v_{21} \\ \alpha_{22} v_{22} \end{pmatrix} + 0.1\begin{pmatrix} \alpha_{31} v_{31} \\ \alpha_{32} v_{32} \end{pmatrix}.$$

In the above formula, 0.6, 0.3, and 0.1 are preset weighting coefficients; $u_1$, $u_2$, and $u_3$ satisfy the basis vector model u, each includes two sub-vectors. The fed-back indication information is required to include indication information of $u_1$, $u_2$, and $u_3$. An indication parameter of at least one indication parameter in the indication information may indicate two elements in the set FS. The set FS includes sub-vectors and sub-vector coefficients in $u_1$ or $u_2$ or $u_3$.

In another embodiment, the column vector of the codeword is obtained by the weighted sum of multiple column vectors. Each column vector is obtained by the Kronecker product of two vectors satisfying the basis vector model u. For example, the i-th column vector $V_i$ of the codeword is obtained in the following manner:

$$V_i = 0.6V_{i1} + 0.4V_{i2} = 0.6u_{11} \otimes u_{12} + 0.4u_{21} \otimes u_{22}.$$

In the above formula, 0.6 and 0.4 are weighting coefficients, $u_{11}$, $u_{12}$, $u_{21}$, and $u_{22}$ satisfy the basis vector model u. The fed-back indication information is required to include indication information of $u_{11}$, $u_{12}$, $u_{21}$, and $u_{22}$. An indication parameter of at least one indication parameter in the indication information may indicate two elements in the set FS. The set FS includes sub-vectors and sub-vector coefficients in $u_{11}$, $u_{12}$, $u_{21}$, or $u_{22}$.

In another embodiment, the column vector of the codeword includes multiple sub-vectors. Each sub-vector may be constructed by the method described in one of the previous three embodiments. Correspondingly, the fed-back indication information is required to include all indication information for construction of the basis vector of the column vector. An indication parameter of at least one parameter in the indication information may indicate two elements in the set FS. The set FS includes sub-vectors and sub-vector coefficients for construction of the basis vector of the column vector.

In practical engineering application, the indication parameter may be further compressed and encoded and then fed back to the first communication node to save the feedback overhead. The first communication node decompresses the received information to obtain the required indication information and then determines the selected codeword according to the indication information.

In another embodiment, the indication information may not directly indicate all or some sub-vectors and their coefficients in the codeword. Rather, the indication information of the sub-vectors and their coefficients is obtained through a transformation function.

In a scenario, the indication information includes a group of indication parameter pairs. The i-th indication parameter pair $[a_i, b_i]$ indicates the i-th column vector. $1 \leq i \leq C$. The indication parameter indicates the parameter required for construction of a corresponding column vector. Table 4 illustrates this indication relationship. Each indication parameter pair $[a_i, b_i]$ corresponds to one actual parameter pair $[x_i, y_i]$.

Table 4 Correspondence between indication parameters and actual parameters

| Indication Parameter | $a_1$ | $a_2$ | ⋯ | $a_i$ | ⋯ | $a_N$ |
|---|---|---|---|---|---|---|
| Actual Parameter | $x_1$ | $x_1$ | ⋯ | $x_i$ | ⋯ | $x_N$ |
| Indication Parameter | $b_1$ | $b_2$ | ⋯ | $b_i$ | ⋯ | $b_N$ |
| Actual Parameter | $y_1$ | $y_2$ | ⋯ | $y_i$ | ⋯ | $y_N$ |

It is possible to determine the codeword corresponding to the indication parameter by determining the sub-vector of the i-th column vector and the coefficient thereof through the parameter pair $[x_i, y_i]$ according to the preset transformation function. For example, when equal-phase-gradient precoding is used, the phase gradient of the k-th sub-vector of the i-th column vector can be determined according to the parameter pair $[x_i, y_i]$ according to the following formula:

$$\theta_k = \arctan\left( \tan \frac{x_i \sin y_i}{x_i \cos y_i - q_k} \right).$$

In the above formula, $q_k$ is a preset parameter, thus the k-th sub-vector $v_k = [1, e^{j\theta_k}, e^{j2\theta_k}, \cdots, e^{j(N_k-1)\theta_k}]$, the sub-vector coefficient can then be determined according to the relationship between the sub-vector and the sub-vector coefficient. Finally, the selected codeword can be determined.

According to the channel information feedback method, the column vector of the codeword is split into sub-vectors of a finer granularity so that more accurate channel information can be fed back to the first communication node and so that the first communication node can implement downlink information transmission with a higher gain based on the indication information.

FIG. 8 is a diagram illustrating the structure of a channel information feedback apparatus according to embodiments of the present application. The apparatus can perform the channel information feedback method of any embodiment of the present application and has function modules and beneficial effects corresponding to the method performed. The apparatus may be implemented by software and/or hardware. As shown in FIG. 8, the apparatus of this embodiment of the present application includes a channel measurement module 301, a codebook determination module 302, a codeword determination module 303, and an information feedback module 304.

The channel measurement module 301 is configured to determine a measurement result of channel state information according to a measured reference signal.

The codebook determination module 302 is configured to determine a codebook. The codebook includes at least one codeword.

The codeword determination module 303 is configured to determine a codeword W within the codebook according to the measurement result.

The information feedback module 304 is configured to feed back indication information of the codeword W.

The codeword W is a matrix that has N rows and r columns and includes r column vectors $V_1, V_2, ..., V_r$, where N > 1, and r ≥ 1.

The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of the k-th sub-vector $v_k$ is $N_k$, $\alpha_k$ is a sub-vector coefficient, K ≥ 1, 1 ≤ k ≤ K, $N_k$ ≥ 1, and i = 1, 2, ..., r. At least one subset $FS_1$ in a set FS including sub-vectors and sub-vector coefficients in the basis vector is determined according to at least one subset $FS_2$ in the set FS.

In some embodiments of the present application, a subset $FS_1$ in the set FS includes all of the sub-vectors in the basis vector model, and a subset $FS_2$ in the set FS includes all of the sub-vector coefficients in the basis vector model.

In some embodiments of the present application, a subset $FS_1$ in the set FS includes a part of the sub-vectors in the basis vector model, and a subset $FS_2$ in the set FS includes a part of the sub-vector coefficients in the basis vector model.

In some embodiments of the present application, a subset $FS_1$ in the set FS includes a part of the sub-vectors and a part of the sub-vector coefficients in the basis vector model, and a subset $FS_2$ in the set FS includes another part of the sub-vector coefficients and another part of the sub-vector coefficients in the basis vector model.

In some embodiments of the present application, the value of one of the subset $FS_1$ and the subset $FS_2$ is determined according to the value of the other one of the subset $FS_1$ and the subset $FS_2$.

In some embodiments of the present application, the indication information includes at least one indication parameter, where an indication parameter indicates at least two elements in the set FS simultaneously.

Based on the preceding embodiments, the indication parameter indicates at least one sub-vector and at least one sub-vector coefficient in the set FS simultaneously.

Based on the preceding embodiments, the indication parameter indicates at least two sub-vector coefficients in the set FS simultaneously.

Based on the preceding embodiments, the indication parameter indicates at least two sub-vectors in the set FS simultaneously.

In some embodiments of the present application, the i-th column vector $V_i$ of the codeword W is a column vector satisfying the basis vector model u, where i = 1, 2, ..., r.

In some embodiments of the present application, the i-th column vector $V_i$ of the codeword W is formed by the Kronecker product of two vectors $u_1$ and $u_2$. $u_1$ and $u_2$ are column vectors satisfying the basis vector model u.

In some embodiments of the present application, the i-th column vector $V_i$ of the codeword W is generated by the weighted sum of M column vectors:

$$V_i = \sum_{m=1}^{M} \beta_m u_m.$$

In the above formula, $\beta_m$ is a weighting coefficient, $u_m$ is a column vector satisfying the basis vector model u. i = 1, 2, ..., r, and m = 1, 2, ..., M.

In some embodiments of the present application, the i-th column vector $V_i$ of the codeword W is generated by the weighted sum of M column vectors:

$$V_i = \sum_{m=1}^{M} \beta_m w_m.$$

In the above formula, $\beta_m$ is a weighting coefficient, $w_m$ is formed by the Kronecker product of two column vectors $u_{m1}$ and $u_{m2}$. $u_{m1}$ and $u_{m2}$ are column vectors satisfying the basis vector model u, i = 1, 2, ..., r, and m = 1, 2, ..., M.

In some embodiments of the present application, the i-th column vector $V_i$ of the codeword W satisfies:

$$V_i = \begin{bmatrix} c_1 V_{i1} \\ c_2 V_{i2} \\ \vdots \\ c_S V_{iS} \end{bmatrix}.$$

In the above formula, $c_s$ is a coefficient, $V_{is}$ is a sub-vector, and s = 1, 2, ..., S.

$V_{is}$ is generated in at least one of the following manners:

$V_{is}$ is generated by the basis vector model u;

$V_{is}$ is formed by the Kronecker product of two vectors $u_1$ and $u_2$, where $u_1$ and $u_2$ are column vectors satisfying the basis vector model u;

$V_{is}$ is generated by the weighted sum of M column vectors of the basis vector model through $V_{is} = \sum_{m=1}^{M} \beta_m u_m$ , where $\beta_m$ is a weighting coefficient, $u_m$ is a column vector satisfying the basis vector model u, i = 1, 2, ..., r, and m = 1, 2, ..., M; or

$V_{is}$ is generated by the weighted sum of M column vectors of the basis vector model through $V_{is} = \sum_{m=1}^{M} \beta_m w_m$ , where $\beta_m$ is a weighting coefficient, $w_m$ is formed by the Kronecker product of two column vectors $u_{m1}$ and $u_{m2}$, and $u_{m1}$ and $u_{m2}$ are column vectors satisfying the basis vector model u, where i = 1, 2, ..., r, and m = 1, 2, ..., M.

In some embodiments of the present application, the k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

where $\theta_k$ is a real number, and j is an imaginary unit.

In some embodiments of the present application, the k-th sub-vector $v_k$ of the basis vector model u is formed by the Kronecker product of two basis vectors $v_{k1}$ and $v_{k2}$ . The two basis vectors each satisfy:

$$v_{kl} = \begin{cases} \begin{bmatrix} 1 & e^{j\theta_{kl}} & \cdots & e^{j(N_{kl}-1)\theta_{kl}} \end{bmatrix}, & N_{kl} > 1, \\ 1 & N_{kl} = 1, \end{cases}$$

where $\theta_{kl}$ is a real number, j is an imaginary unit, $l \in [1,2]$ , and $N_{k1} * N_{k2} = N_k$.

In some embodiments of the present application, the k-th sub-vector $v_k$ of the basis vector model u satisfies:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

where $\theta_k^{(n)} = \xi_k + n\eta_k + n^2 \zeta_k$ , $\xi_k, \eta_k,$ and $\zeta_k$ are each a preset real-valued constant, j is an imaginary unit, and $1 \le n \le N_k$.

In some embodiments of the present application, the k-th sub-vector $v_k$ of the basis vector model u is formed by the Kronecker product of two basis vectors $v_{k1}$ and $v_{k2}$ . The two basis vectors each satisfy:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}, & N_{kl} > 1, \\ 1, & N_{kl} = 1, \end{cases}$$

where $\theta_{kl}^{(n)} = \xi_{kl} + n\eta_{kl} + n^2\zeta_{kl}$, $\xi_{kl}$, $\eta_{kl}$, and $\zeta_{kl}$ are each a preset real-valued constant, j is an imaginary unit, $l \in [1,2]$, $1 \leq n \leq N_{kl}$, and $N_{k1} * N_{k2} = N_k$.

In some embodiments of the present application, the k-th sub-vector coefficient $\alpha_k$ of the basis vector model u is determined according to at least one sub-vector in a sub-vector set $[v_1, v_2, \cdots, v_K]$.

In some embodiments of the present application, the k-th sub-vector $v_k$ of the basis vector model u is determined according to at least one coefficient in a coefficient set $[\alpha_1, \alpha_2, \cdots, \alpha_K]$.

In some embodiments of the present application, the sub-vector coefficient $\alpha_k$ is determined according to $\alpha_{k-1}$ and $v_{k-1}$.

In some embodiments of the present application, the sub-vector coefficient $\alpha_k$ is determined according to $\alpha_{k-1}$, $v_{k-1}$, and $v_k$.

In some embodiments of the present application, the sub-vectors $v_{k-1}$ and $v_k$ are determined according to $\alpha_k$.

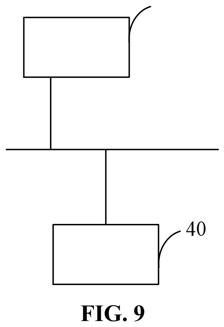

FIG. 9 is a block diagram of an electronic device according to embodiments of the present application. The electronic device includes a processor 40 and a memory 41. One or more processors 40 may be included in the electronic device. One processor 40 is shown as an example in FIG. 9. The processor 40 and the memory 41 in the electronic device may be connected via a bus or in other manners. The connection via a bus is shown as an example in FIG. 9.

As a computer-readable storage medium, the memory 41 may be configured to store software programs, computer-executable programs and modules, such as programs corresponding to the transmission method of any embodiment of the present application and modules (the channel measurement module 301, the codebook determination module 302, the codeword determination module 303, and the information feedback module 304) corresponding to the transmission apparatus of any embodiment of the present application. The processor 40 executes software programs, instructions and modules stored in the memory 41 to perform functions and data processing of the electronic device, that is, to perform the preceding channel information feedback method.

The memory 41 may mainly include a program storage region and a data storage region. The program storage region may store an operating system and a program required by at least one function. The data storage region may store data created based on the use of the electronic device. In addition, the memory 41 may include a high-speed random access memory and a nonvolatile memory, such as at least one disk memory, a flash memory or other nonvolatile solid-state memories. In some examples, the memory 41 may also be a memory remote from the processor 40 and connectable to the electronic device via a network. Examples of the network include, but are not limited to, the Internet, an intranet, a local area network, a mobile communication network, and a combination thereof.

Embodiments of the present application also provide a storage medium including computer-executable instructions. The computer-executable instructions are configured to, when executed by a computer processor, cause the computer processor to perform a channel information feedback method.

The method includes determining a measurement result of channel state information according to a measured reference signal; determining a codebook, where the codebook includes at least one codeword; determining a codeword W within the codebook according to the measurement result; and feeding back indication information of the codeword W.

The codeword W is a matrix that has N rows and r columns and includes r column vectors $V_1$, $V_2$, ..., $V_r$, where $N > 1$, and $r \geq 1$.

The i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix}.$$

In the above formula, the basis vector model u includes K sub-vectors, the length of the k-th sub-vector $v_k$ is $N_k$, $\alpha_k$ is a sub-vector coefficient, $K \geq 1$, $1 \leq k \leq K$, $N_k \geq 1$, and i = 1, 2, ..., r. At least one subset $FS_1$ in a set FS including sub-vectors and sub-vector coefficients in the basis vector is determined according to at least one subset $FS_2$ in the set FS.

From the preceding description of embodiments, it is apparent to those skilled in the art that the present application may be implemented by software and necessary general-purpose hardware or may be implemented by hardware, but the former is a preferred implementation in many cases. Based on this understanding, the technical solutions of the present application substantially, or the part contributing to the existing art, may be embodied in the form of a software product. The computer software product may be stored in a computer-readable storage medium such as a floppy disk, a read-only memory (ROM), a random-access memory (RAM), a flash memory, a hard disk, or an optical disc of a computer and includes several instructions for causing a computer device (which may be a personal computer, a server, a network device, or the like) to perform the methods in the embodiments of the present application.

It is to be noted that units and modules included in the preceding embodiment of the apparatus are divided according to functional logic, and the division is not limited to this as long as the corresponding functions can be implemented. Additionally, the specific names of function units are used for distinguishing between each other and are not to limit the scope of the present application.

It is to be understood by those of ordinary skill in the art that some or all operations of the preceding method and function modules/units in the preceding apparatus or device may be implemented as software, firmware, hardware, and suitable combinations thereof.

In the hardware implementation, the division of the preceding function modules/units may not correspond to the division of physical components. For example, one physical component may have multiple functions, or one function or operation may be performed jointly by several physical components. Some or all physical components may be implemented as software executed by a processor such as a central processing unit, a digital signal processor, or a microprocessor, may be implemented as hardware, or may be implemented as integrated circuits such as application-specific integrated circuits. The corresponding software may be distributed on computer-readable media. The computer-readable media may include computer storage media (or non-transitory media) and communication media (or transitory media). As is known to those having ordinary skill in the art, the term computer storage media includes volatile and nonvolatile media as well as removable and non-removable media implemented in any method or technology for storing information (such as computer-readable instructions, data structures, program modules, or other data). The computer storage media include, but are not limited to, a RAM, a ROM, an electrically erasable programmable read-only memory (EEPROM), a flash memory or other memory technologies, a compact disc read-only memory (CD-ROM), a digital video disc (DVD) or other optical disc memories, magnetic cassettes, magnetic tapes, magnetic disk memories or other magnetic storage apparatuses, or any other media used for storing the desired information and accessible by a computer. Additionally, as is known to those having ordinary skill in the art, the communication media generally include computer-readable instructions, data structures, program modules, or other data in carriers or in modulated data signals transported in other transport mechanisms and may include any information delivery medium.

The preceding content illustrates the preferred embodiments of the present application with reference to the drawings and is not intended to limit the scope of the present application. Any modifications, equivalent substitutions, and improvements made by those skilled in the art without departing from the scope and substantive content of the present application fall within the scope of the present application.

**Claims**

1. A channel information feedback method, comprising:

   determining a measurement result of channel state information according to a measured reference signal;
   determining a codebook, wherein the codebook comprises at least one codeword;
   determining a codeword W within the codebook according to the measurement result; and
   feeding back indication information of the codeword W;
   wherein the codeword W is a matrix that has N rows and r columns and comprises r column vectors $V_1, V_2, ..., V_r$, wherein N > 1, and r ≥ 1; and
   an i-th column vector $V_i$ of the codeword W is constructed according to the following basis vector model u:

$$u = \begin{bmatrix} \alpha_1 v_1 \\ \alpha_2 v_2 \\ \vdots \\ \alpha_K v_K \end{bmatrix},$$

   wherein the basis vector model u comprises K sub-vectors, a length of a k-th sub-vector $v_k$ of the K sub-vectors is $N_k$, $\alpha_k$ is a sub-vector coefficient of the k-th sub-vector $v_k$, K ≥ 1, 1 ≤ k ≤ K, $N_k$ ≥ 1, i = 1, 2, ..., r, and at least one subset $FS_1$ in a set FS is determined according to at least one subset $FS_2$ in the set FS, wherein the set FS comprises the K sub-vectors and K sub-vector coefficients in the basis vector.

2. The method of claim 1, wherein a subset $FS_1$ in the set FS comprises all of the sub-vectors in the basis vector model, and a subset $FS_2$ in the set FS comprises all of the sub-vector coefficients in the basis vector model.

3. The method of claim 1, wherein a subset $FS_1$ in the set FS comprises a part of the sub-vectors in the basis vector model, and a subset $FS_2$ in the set FS comprises a part of the sub-vector coefficients in the basis vector model.

4. The method of claim 1, wherein a subset $FS_1$ in the set FS comprises a part of the sub-vectors and a part of the sub-vector coefficients in the basis vector model, and a subset $FS_2$ in the set FS comprises another part of the sub-vectors and another part of the sub-vector coefficients in the basis vector model.

5. The method of any one of claims 2 to 4, wherein a value of the subset $FS_1$ is determined according to a value of the subset $FS_2$, or a value of the subset $FS_2$ is determined according to a value of the subset $FS_1$.

6. The method of claim 1, wherein the indication information comprises at least one indication parameter, an indication parameter of the at least one indication parameter indicates at least two elements in the set FS simultaneously.

7. The method of claim 6, wherein the indication parameter indicates at least one sub-vector and at least one sub-vector coefficient in the set FS simultaneously.

8. The method of claim 6, wherein the indication parameter indicates at least two sub-vector coefficients in the set FS simultaneously.

9. The method of claim 6, wherein the indication parameter indicates at least two sub-vectors in the set FS simultaneously.

10. The method of claim 1, wherein the i-th column vector $V_i$ of the codeword W is a column vector satisfying the basis vector model u, wherein i = 1, 2, ..., r.

11. The method of claim 1, wherein the i-th column vector $V_i$ of the codeword W is formed by a Kronecker product of two vectors $u_1$ and $u_2$, wherein $u_1$ and $u_2$ are column vectors satisfying the basis vector model u.

12. The method of claim 1, wherein the i-th column vector $V_i$ of the codeword W is generated by a weighted sum of M column vectors:

$$V_i = \sum_{m=1}^{M} \beta_m u_m ,$$

wherein $\beta_m$ is a weighting coefficient, and $u_m$ is a column vector satisfying the basis vector model u, i = 1, 2, ..., r, and m = 1, 2, ..., M.

13. The method of claim 1, wherein the i-th column vector $V_i$ of the codeword W is generated by a weighted sum of M column vectors:

$$V_i = \sum_{m=1}^{M} \beta_m w_m ,$$

wherein $\beta_m$ is a weighting coefficient, $w_m$ is formed by a Kronecker product of two column vectors $u_{m1}$ and $u_{m2}$, and $u_{m1}$ and $u_{m2}$ are column vectors satisfying the basis vector model u, wherein i = 1, 2, ..., r, and m = 1, 2, ..., M.

14. The method of any one of claims 1, 10, 11, 12, or 13, wherein the i-th column vector $V_i$ of the codeword W satisfies:

$$V_i = \begin{bmatrix} c_1 V_{i1} \\ c_2 V_{i2} \\ \vdots \\ c_S V_{iS} \end{bmatrix} ,$$

wherein $c_s$ is a coefficient, $V_{is}$ is a sub-vector, s = 1, 2, ..., S, and $V_{is}$ is generated in at least one of the following manners:

directly generated by the basis vector model u;

formed by a Kronecker product of two vectors $u_1$ and $u_2$, wherein $u_1$ and $u_2$ are column vectors satisfying the basis vector model u;

generated by a weighted sum of M column vectors of the basis vector model through $V_{is} = \sum_{m=1}^{M} \beta_m u_m$ , wherein $\beta_m$ is a weighting coefficient, $u_m$ is a column vector satisfying the basis vector model u, i = 1, 2, ..., r, and m = 1, 2, ..., M; or

generated by a weighted sum of M column vectors of the basis vector model through $V_{is} = \sum_{m=1}^{M} \beta_m w_m$ , wherein $\beta_m$ is a weighting coefficient, $w_m$ is formed by a Kronecker product of two column vectors $u_{m1}$ and $u_{m2}$, and $u_{m1}$ and $u_{m2}$ are column vectors satisfying the basis vector model u, wherein i = 1, 2, ..., r, and m = 1, 2, ..., M.

15. The method of claim 1, wherein the k-th sub-vector $v_k$ of the basis vector model u satisfies:

$$v_k = \begin{cases} \begin{bmatrix} 1 & e^{j\theta_k} & \cdots & e^{j(N_k-1)\theta_k} \end{bmatrix}, & N_k > 1, \\ 1, & N_k = 1, \end{cases}$$

wherein $\theta_k$ is a real number, and j is an imaginary unit.

16. The method of claim 1, wherein the k-th sub-vector $v_k$ of the basis vector model u is formed by a Kronecker product of two basis vectors $v_{k1}$ and $v_{k2}$, and the two basis vectors $v_{k1}$ and $v_{k2}$ each satisfy:

$$v_{kl} = \begin{cases} \begin{bmatrix} 1 & e^{j\theta_{kl}} & \cdots & e^{j(N_{kl}-1)\theta_{kl}} \end{bmatrix}, & N_{kl} > 1, \\ 1 & N_{kl} = 1, \end{cases}$$

wherein $\theta_{kl}$ is a real number, j is an imaginary unit, $l \in [1,2]$, and $N_{k1} * N_{k2} = N_k$.

17. The method of claim 1, wherein the k-th sub-vector $v_k$ of the basis vector model u satisfies:

$$v_k = \begin{cases} \begin{bmatrix} 1 & e^{j\theta_k^{(1)}} & \cdots & e^{j\theta_k^{(N_k-1)}} \end{bmatrix}, & N_k > 1, \\ 1, & N_k = 1, \end{cases}$$

wherein $\theta_k^{(n)} = \xi_k + n\eta_k + n^2\zeta_k$ , $\xi_k$, $\eta_k$, and $\zeta_k$ are each a preset real-valued constant, j is an imaginary unit, and $1 \leq n \leq N_k$.

18. The method of claim 1, wherein the k-th sub-vector $v_k$ of the basis vector model u is formed by a Kronecker product of two basis vectors $v_{k1}$ and $v_{k2}$, and the two basis vectors $v_{k1}$ and $v_{k2}$ each satisfy:

$$v_{kl} = \begin{cases} \begin{bmatrix} 1 & e^{j\theta_{kl}^{(1)}} & \cdots & e^{j\theta_{kl}^{(N_{kl}-1)}} \end{bmatrix}, & N_{kl} > 1, \\ 1, & N_{kl} = 1, \end{cases}$$

wherein $\theta_{kl}^{(n)} = \xi_{kl} + n\eta_{kl} + n^2\zeta_{kl}$ , $\xi_{kl}$, $\eta_{kl}$, and $\zeta_{kl}$ are each a preset real-valued constant, j is an imaginary unit, $l \in [1,2]$, $1 \leq n \leq N_{kl}$, and $N_{k1} * N_{k2} = N_k$.

19. The method of any one of claims 15 to 18, wherein the k-th sub-vector coefficient $\alpha_k$ of the basis vector model u is determined according to at least one sub-vector in a sub-vector set $[v_1, v_2, \cdots, v_k]$.

20. The method of any one of claims 15 to 18, wherein the k-th sub-vector $v_k$ of the basis vector model u is determined according to at least one sub-vector coefficient in a coefficient set $[\alpha_1, \alpha_2, \cdots, \alpha_k]$.

21. The method of any one of claims 15 to 18, wherein the k-th sub-vector coefficient $\alpha_k$ is determined according to a (k-1)-th sub-vector coefficient $\alpha_{k-1}$ and a (k-1)-th sub-vector $v_{k-1}$.

22. The method of any one of claims 15 to 18, wherein the k-th sub-vector coefficient $\alpha_k$ is determined according to a (k-1)-th sub-vector coefficient $\alpha_{k-1}$, a (k-1)-th sub-vector $v_{k-1}$, and the k-th sub-vector $v_k$.

23. The method of any one of claims 15 to 18, wherein the (k-1)-th sub-vector $v_{k-1}$ and the k-th sub-vector $v_k$ are determined according to $\alpha_k$.

24. An electronic device, comprising:

    at least one processor; and
    a memory configured to store at least one program;
    wherein when the at least one program is executed by the at least one processor, the at least one processor performs the method of any one of claims 1 to 23.

25. A computer-readable storage medium storing at least one program, wherein the at least one program is configured, when executed by at least one processor, causes the at least one processor to perform the method of any one of claims 1 to 23.

The electromagnetic field is dominated by reactive components

Reactive near-field region

Radiating near-field region (Fresnel zone)

Far-field region (Fraunhofer region)

$$\frac{\lambda}{2\pi}$$

$$0.62\sqrt{\frac{D^3}{\lambda}}$$

$$2\frac{D^2}{\lambda}$$

**FIG. 1**

**FIG. 2**

**FIG. 3**

| | |
|---|---|
| Determine a measurement result of channel state information according to a measurement reference signal | S110 |
| Determine a codebook, where the codebook includes at least two codewords | S120 |
| Determine a codeword W within the codebook according to the measurement result | S130 |
| Feed back indication information of the codeword W | S140 |

**FIG. 4**

(a)                                          (b)

**FIG. 5**

| | |
|---|---|
| Receive a reference signal sent by a first communication node and perform channel estimation according to the received reference signal to obtain channel information | S1 |
| Determine the codebook for feedback according to the obtained channel information | S2 |
| Determine a codeword from the selected codebook to represent the current channel | S3 |
| Feed back indication information corresponding to the selected codeword to the first communication node | S4 |

**FIG. 6**

**FIG. 7**

**FIG. 8**

**FIG. 9**

## INTERNATIONAL SEARCH REPORT

| International application No. |
| --- |
| **PCT/CN2023/140174** |

| A. | CLASSIFICATION OF SUBJECT MATTER |
| --- | --- |

H04B7/0456(2017.01)i

According to International Patent Classification (IPC) or to both national classification and IPC

| B. | FIELDS SEARCHED |
| --- | --- |

Minimum documentation searched (classification system followed by classification symbols)

IPC: H04B; H04W

Documentation searched other than minimum documentation to the extent that such documents are included in the fields searched

Electronic data base consulted during the international search (name of data base and, where practicable, search terms used)

CNTXT: CNKI; ENTXTC; ENTXT; VEN; 3GPP; IEEE: 码字, 码本, 码书, 预编码, PMI, 基底, 基, 子, 向量, 矢量, 模型, 系数, 加权, 权重, 权值, 关联, 组合, codeword, codebook, CB, PMI, precoding, basis, sub, vector, model, coefficient, parameter, weight, relation, combine

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2022160322 A1 (HUAWEI TECHNOLOGIES CO., LTD.) 04 August 2022 (2022-08-04) description, paragraphs 190-275 | 1-25 |
| A | US 2020374175 A1 (HUAWEI TECHNOLOGIES CO., LTD.) 26 November 2020 (2020-11-26) entire document | 1-25 |
| A | WO 2022106730 A1 (FRAUNHOFER GESELLSCHAFT ZUR FORDERUNG DER ANGEWANDTEN FORSCHUNG E.V.) 27 May 2022 (2022-05-27) entire document | 1-25 |
| A | WO 2023026197 A1 (TELEFONAKTIEBOLAGET LM ERICSSON (PUBL)) 02 March 2023 (2023-03-02) entire document | 1-25 |
| A | CN 114557073 A (ZTE CORP.) 27 May 2022 (2022-05-27) entire document | 1-25 |
| A | CN 115053465 A (HUAWEI TECHNOLOGIES CO., LTD.) 13 September 2022 (2022-09-13) entire document | 1-25 |

☑ Further documents are listed in the continuation of Box C. ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **05 March 2024** | **22 March 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**EP 4 693 926 A1**

## INTERNATIONAL SEARCH REPORT

<table>
<tr><td colspan="2">International application No.</td></tr>
<tr><td colspan="2"><strong>PCT/CN2023/140174</strong></td></tr>
</table>

**C.    DOCUMENTS CONSIDERED TO BE RELEVANT**

| Category* | Citation of document, with indication, where appropriate, of the relevant passages | Relevant to claim No. |
|---|---|---|
| A | WO 2021238576 A1 (HUAWEI TECHNOLOGIES CO., LTD.) 02 December 2021 (2021-12-02)<br>    entire document | 1-25 |
| A | WO 2023011089 A1 (HUAWEI TECHNOLOGIES CO., LTD.) 09 February 2023 (2023-02-09)<br>    entire document | 1-25 |
| A | WO 2023026200 A1 (TELEFONAKTIEBOLAGET LM ERICSSON (PUBL)) 02 March 2023 (2023-03-02)<br>    entire document | 1-25 |
| A | Moderator (SAMSUNG). "R1-2205362 Rel-18 MIMO CSI Round 3"<br>*3GPPTsg_ran\Wg1_rl1*, 16 May 2022 (2022-05-16),<br>    sections 1-2 | 1-25 |

Form PCT/ISA/210 (second sheet) (July 2022)

**INTERNATIONAL SEARCH REPORT**
Information on patent family members

International application No.

**PCT/CN2023/140174**

| Patent document cited in search report | | | Publication date (day/month/year) | Patent family member(s) | | | Publication date (day/month/year) |
|---|---|---|---|---|---|---|---|
| WO | 2022160322 | A1 | 04 August 2022 | EP | 4274112 | A1 | 08 November 2023 |
| | | | | US | 2024030981 | A1 | 25 January 2024 |
| | | | | CN | 116762284 | A | 25 September 2023 |
| US | 2020374175 | A1 | 26 November 2020 | US | 11184208 | B2 | 23 November 2021 |
| | | | | EP | 3751768 | A1 | 16 December 2020 |
| | | | | EP | 3751768 | A4 | 20 January 2021 |
| | | | | WO | 2019157757 | A1 | 22 August 2019 |
| | | | | CN | 111713054 | A | 25 September 2020 |
| | | | | CN | 111713054 | B | 03 December 2021 |
| WO | 2022106730 | A1 | 27 May 2022 | EP | 4248579 | A1 | 27 September 2023 |
| | | | | US | 2023421220 | A1 | 28 December 2023 |
| | | | | EP | 4002713 | A1 | 25 May 2022 |
| | | | | KR | 20230107686 | A | 17 July 2023 |
| WO | 2023026197 | A1 | 02 March 2023 | None | | | |
| CN | 114557073 | A | 27 May 2022 | WO | 2021102952 | A1 | 03 June 2021 |
| | | | | US | 2022286257 | A1 | 08 September 2022 |
| | | | | EP | 4066557 | A1 | 05 October 2022 |
| | | | | EP | 4066557 | A4 | 21 December 2022 |
| CN | 115053465 | A | 13 September 2022 | WO | 2021155610 | A1 | 12 August 2021 |
| | | | | EP | 4092919 | A1 | 23 November 2022 |
| | | | | EP | 4092919 | A4 | 11 January 2023 |
| | | | | US | 2022385343 | A1 | 01 December 2022 |
| WO | 2021238576 | A1 | 02 December 2021 | CN | 113746514 | A | 03 December 2021 |
| WO | 2023011089 | A1 | 09 February 2023 | None | | | |
| WO | 2023026200 | A1 | 02 March 2023 | None | | | |

Form PCT/ISA/210 (patent family annex) (July 2022)